# EUROPEAN PATENT APPLICATION

(11) **EP 4 794 439 A1**
(43) Date of publication of application: **19.08.2026**
(21) Application number: 24884498.7
(22) Date of filing: 21.10.2024
(51) Int. Cl.: H04W 74/0833

(54) **COMMUNICATION METHOD, APPARATUS AND SYSTEM, AND STORAGE MEDIUM**

(30) Priority: 02.11.2023 CN 202311452402
(71) Applicant: HUAWEI TECHNOLOGIES CO., LTD., Shenzhen 518129 (CN)
(72) Inventor: SHI, Meng, Shenzhen, Guangdong 518129 (CN); LIAO, Shuri, Shenzhen, Guangdong 518129 (CN); YANG, Liu, Shenzhen, Guangdong 518129 (CN); DOU, Shengyue, Shenzhen, Guangdong 518129 (CN)
(74) Representative: MERH-IP Matias Erny Reichl Hoffmann Patentanwälte PartG mbB
(86) International application number: PCT/CN2024/126227
(87) International publication number: WO 2025/092494

(57) **Abstract**

A communication method, apparatus, and system, and a storage medium are provided. **In** this application, system information and a synchronization sequence are sent in a same information block, so that a delay in initiating random access by a terminal device can be reduced, and efficiency of random access can be improved. Alternatively, a network device sends at least one information block at a position spaced N time units apart from a synchronization signal/broadcast signal block, and the at least one information block carries necessary information for initiating random access by the terminal device and position information of a network side, so that the terminal device can access a cell in time, thereby reducing an access delay.

## Description

This application claims priority to Chinese Patent Application No. 202311452402.0, filed with the China National Intellectual Property Administration on November 2, 2023 and entitled "COMMUNICATION METHOD, APPARATUS, AND SYSTEM, AND STORAGE MEDIUM", which is incorporated herein by reference in its entirety.

### TECHNICAL FIELD

This application relates to the field of communication technologies, and in particular, to a communication method, apparatus, and system, and a storage medium.

### BACKGROUND

An ultra-wide coverage communication system can support wider service coverage. For example, in a non-terrestrial network (non-terrestrial network, NTN) communication system, a satellite/high-altitude platform, as an access network device of the NTN system, may cover a large area to provide a communication service for some regions such as an ocean and a forest.

In an initial access phase, the access network device in the NTN system needs to sequentially scan all beams, and configure a random access resource for a terminal device. The access network device may broadcast different synchronization signals/broadcast signal blocks (synchronization signals/physical broadcast channel blocks, SS/PBCH blocks, or SSBs) for different communication regions, and distinguish between the synchronization signals/broadcast signal blocks using SSB indexes (indexes). After receiving an SSB, the terminal device completes timing synchronization, determines a time-frequency position of a system information block 1 (system information block 1, SIB1) based on an information indication in the SSB, and parses SIB1 to obtain cell information. A system information block 19 (system information block 19, SIB19) is detected based on a search space of SIB19 configured in SIB1 and data is parsed to obtain ephemeris information of the satellite. After obtaining the cell information and/or the ephemeris information, the terminal device initiates random access on a corresponding uplink resource based on configuration information and an SSB index in SIB1 and/or SIB19.

In the foregoing initial access procedure, the SSB needs to be obtained first, and then the cell information needs to be obtained from SIB1. Two steps are required to obtain the information, which causes a delay and affects an access delay.

In view of this, in an ultra-wide coverage communication scenario, a network changes rapidly, and how to reduce an access delay of a terminal device is an urgent problem to be resolved currently.

### SUMMARY

This application provides a communication method, apparatus, and system, and a storage medium, to reduce an access delay of a terminal device.

According to a first aspect, a communication method is provided. The method is implemented by a terminal device or a chip or a circuit used in the terminal device.

The method includes: receiving an information block in a slot, where the information block includes a synchronization sequence and system information, and the system information includes position information of a network device and random access configuration information; and initiating, based on the system information, random access to a cell synchronized based on the synchronization sequence. According to the method, the system information including the position information of the network device and the synchronization sequence are sent in a same information block, so that a delay in initiating random access by the terminal device can be reduced, and efficiency of random access can be improved.

In a possible implementation, the method further includes: receiving a random access response sent by the network device using a beam with a first beam width; sending a message 3 in a random access procedure; receiving a message 4 sent by the network device using a beam with the first beam width; and sending a message 5 in the random access procedure.

In another possible implementation, the information block is a plurality of information blocks, and the plurality of information blocks are consecutive in time domain. According to this implementation, the plurality of information blocks are configured as being consecutive in time domain, so that when searching for information blocks, the terminal device can centrally receive the plurality of information blocks in time domain, and determine an information block to be used. A centralized pattern design reduces an access delay of the terminal device, so that the terminal device can achieve earlier access. Centralized information blocks provide system information in a plurality of consecutive slots, and the terminal device may jointly demodulate and receive system information in adjacent slots, improving performance.

According to a second aspect, a communication method is provided. The method is implemented by a network device or a chip or a circuit used in the network device.

The method includes: sending an information block in a slot, where the information block includes a synchronization sequence and system information, and the system information includes position information of a network device and random access configuration information; and receiving, based on the system information, random access initiated to a cell synchronized based on the synchronization sequence. According to the method, the system information including the position information of the network device and the synchronization sequence are sent in a same information block, so that a delay in initiating random access by the terminal device can be reduced, and efficiency of random access can be improved.

In a possible implementation, the method further includes: sending a random access response using a beam with a first beam width; receiving a message 3 in a random access procedure on the beam with the first beam width; sending a message 4 on a beam with the first beam width; and receiving a message 5 in the random access procedure on the first beam width.

In another possible implementation, the information block is a plurality of information blocks, the plurality of information blocks are consecutive in time domain, and the plurality of information blocks correspond to a plurality of network coverage areas. According to this implementation, the plurality of information blocks are configured as being consecutive in time domain, so that when searching for information blocks, the terminal device can centrally receive the plurality of information blocks in time domain, and determine an information block to be used. A centralized pattern design reduces an access delay of the terminal device, so that the terminal device can achieve earlier access. Centralized information blocks provide system information in a plurality of consecutive slots, and the terminal device may jointly demodulate and receive system information in adjacent slots, improving performance.

With reference to any one of the first aspect, the second aspect, or the implementations of the first aspect or the second aspect, in another possible implementation, the information block is carried on a first beam, and a beam width of the first beam is greater than or equal to the first beam width. According to this implementation, the information block may be sent using a wide beam.

With reference to any one of the first aspect, the second aspect, or the implementations of the first aspect or the second aspect, in another possible implementation, a network coverage area corresponding to the first beam is greater than or equal to a coverage area of a beam sent using the first beam width.

With reference to any one of the first aspect, the second aspect, or the implementations of the first aspect or the second aspect, in another possible implementation, bandwidth corresponding to the information block is less than or equal to 20 resource blocks. According to this implementation, the system information occupies small bandwidth in frequency domain, and a link budget for downlink transmission may be increased in a power aggregation manner, thereby increasing a quantity of information bits that can be transmitted.

With reference to any one of the first aspect, the second aspect, or the implementations of the first aspect or the second aspect, in another possible implementation, in the information block, the synchronization sequence is consecutive with the system information in time domain, and a time domain position of the synchronization sequence precedes a time domain position of the system information. According to this implementation, the synchronization sequence is used for timing and synchronization, and is placed at the beginning of a slot, so that it can be ensured that sequence detection is completed as soon as possible. In addition, synchronization sequences are placed together, so that more consecutive time domain resources can be reserved for subsequent transmission of system information. The system information occupies consecutive time domain resources, and more resources may be used to transmit the system information required for access, thereby increasing a quantity of information bits that can be transmitted.

With reference to any one of the first aspect, the second aspect, or the implementations of the first aspect or the second aspect, in another possible implementation, the information block further includes a plurality of demodulation reference signals, and the plurality of demodulation reference signals are used to demodulate the system information. According to this implementation, considering that a time-frequency offset may be excessively large in ultra-wide coverage, a plurality of demodulation reference signals need to be used for joint demodulation to optimize performance and improve transmission performance.

With reference to any one of the first aspect, the second aspect, or the implementations of the first aspect or the second aspect, in another possible implementation, the information block is carried on a physical downlink shared channel. According to this implementation, the information block is carried using the physical downlink shared channel. Compared with existing transmission of a MIB using a control channel, more transmitted bits can be carried.

With reference to any one of the first aspect, the second aspect, or the implementations of the first aspect or the second aspect, in another possible implementation, the system information further includes at least one of the following: an uplink transmission common configuration, a downlink transmission common configuration, a quantity of information blocks, a period of the information block, or a pattern of the information block.

According to a third aspect, a communication method is provided. The method is implemented by a terminal device or a chip or a circuit used in the terminal device.

The method includes: receiving at least one information block in a slot, where each of the at least one information block includes position information of a network device and random access configuration information, the information block is spaced N time units apart from a synchronization signal/broadcast signal block, and N is an integer greater than or equal to 0; and initiating, based on each information block, random access to a cell synchronized based on the synchronization signal/broadcast signal block. Through the method, the terminal device receives, at the position spaced N time units apart from the synchronization signal/broadcast signal block, at least one information block sent by the network device, and the at least one information block carries necessary information for initiating random access by the terminal device, so that the terminal device can access a cell in time, thereby reducing an access delay.

In a possible implementation, the method further includes: receiving a random access response sent by the network device using a beam with a first beam width; sending a message 3 in a random access procedure; receiving a message 4 sent by the network device using a beam with the first beam width; and sending a message 5 in the random access procedure.

In another possible implementation, the at least one information block is consecutive in time domain. According to this implementation, the at least one information block is configured to be consecutive in time domain, so that when searching for information blocks, the terminal device can receive the plurality of information blocks in time domain in a centralized manner, and determine an information block to be used. A centralized pattern design reduces an access delay of the terminal device, so that the terminal device can achieve earlier access. Centralized information blocks provide system information in a plurality of consecutive slots, and the terminal device may jointly demodulate and receive system information in adjacent slots, so that performance can be improved.

According to a fourth aspect, a communication method is provided. The method may be implemented by a network device, or a chip or a circuit used in a network device.

The method includes: sending at least one information block in a slot, where each of the at least one information block includes position information of a network device and random access configuration information, the information block is spaced N time units apart from a synchronization signal/broadcast signal block, and N is an integer greater than or equal to 0; and receiving, based on each information block, random access initiated to a cell synchronized based on the synchronization signal/broadcast signal block. Through the method, the network device sends at least one information block at the position spaced N time units apart from the synchronization signal/broadcast signal block, and the at least one information block carries necessary information for initiating random access by the terminal device, so that the terminal device can access a cell in time, thereby reducing an access delay.

In a possible implementation, the method further includes: sending a random access response using a beam with a first beam width; receiving a message 3 in a random access procedure on the beam with the first beam width; sending a message 4 on a beam with the first beam width; and receiving a message 5 in the random access procedure on the first beam width.

In another possible implementation, the at least one information block is consecutive in time domain, and the at least one information block respectively corresponds to at least one network coverage area. According to this implementation, the plurality of information blocks are configured to be consecutive in time domain, so that when searching for information blocks, the terminal device can centrally receive the plurality of information blocks in time domain, and determine an information block to be used. A centralized pattern design reduces an access delay of the terminal device, so that the terminal device can achieve earlier access. Centralized information blocks provide system information in a plurality of consecutive slots, and the terminal device may jointly demodulate and receive system information in adjacent slots, improving performance.

With reference to any one of the third aspect, the fourth aspect, or the implementations of the third aspect or the fourth aspect, in another possible implementation, the synchronization signal/broadcast signal block indicates a time-frequency resource position of each information block. According to this implementation, different from an existing synchronization signal/broadcast signal block, in the implementation, the synchronization signal/broadcast signal block may indicate a time-frequency resource position of a corresponding information block. After receiving the synchronization signal/broadcast signal block, the terminal device may determine, based on information carried in the synchronization signal/broadcast signal block, a time-frequency resource position of an information block corresponding to the synchronization signal/broadcast signal block.

With reference to any one of the third aspect, the fourth aspect, or the implementations of the third aspect or the fourth aspect, in another possible implementation, the synchronization signal/broadcast signal block indicates an index of a time domain offset and/or an index of a frequency domain offset, the time domain offset is a time domain offset between each information block and the synchronization signal/broadcast signal block corresponding to each information block, and the frequency domain offset is an offset of a frequency domain start or end position between each information block and the synchronization signal/broadcast signal block corresponding to each information block. For example, the time domain offset may be a slot offset. According to this implementation, a time domain position of the information block corresponding to the synchronization signal/broadcast signal block may be indicated using several bits in the synchronization signal/broadcast signal block, and a frequency domain position of the information block corresponding to the synchronization signal/broadcast signal block may be indicated using several bits in the synchronization signal/broadcast signal block.

With reference to any one of the third aspect, the fourth aspect, or the implementations of the third aspect or the fourth aspect, in another possible implementation, each information block is carried on a first beam, and a beam width of the first beam is greater than or equal to the first beam width. According to this implementation, the at least one information block is sent using a wide beam, so that coverage performance can be improved.

With reference to any one of the third aspect, the fourth aspect, or the implementations of the third aspect or the fourth aspect, in another possible implementation, a network coverage area corresponding to the first beam is greater than or equal to a coverage area of a beam sent using the first beam width.

With reference to any one of the third aspect, the fourth aspect, or the implementations of the third aspect or the fourth aspect, in another possible implementation, bandwidth corresponding to each information block is less than or equal to 20 resource blocks. According to this implementation, the information block occupies small bandwidth in frequency domain, and a link budget for downlink transmission may be increased in a power aggregation manner, thereby increasing a quantity of information bits that can be transmitted.

With reference to any one of the third aspect, the fourth aspect, or the implementations of the third aspect or the fourth aspect, in another possible implementation, each information block further includes a plurality of demodulation reference signals, and the plurality of demodulation reference signals are used to demodulate the system information.

With reference to any one of the third aspect, the fourth aspect, or the implementations of the third aspect or the fourth aspect, in another possible implementation, the at least one information block is carried on a physical downlink shared channel. According to this implementation, the at least one information block is carried using the physical downlink shared channel. Compared with existing transmission of a MIB using a control channel, more transmitted bits can be carried.

With reference to any one of the third aspect, the fourth aspect, or the implementations of the third aspect or the fourth aspect, in another possible implementation, each information block further includes at least one of the following: an uplink transmission common configuration, a downlink transmission common configuration, a quantity of information blocks, a period of the information block, and a pattern of the information block.

According to a fifth aspect, a communication apparatus is provided. The communication apparatus may implement the method in the first aspect. For example, the communication apparatus may be a chip or a terminal device. The foregoing method may be implemented by software, hardware, or hardware executing corresponding software.

In a possible implementation, the apparatus includes a transceiver unit and a processing unit. The transceiver unit is configured to receive an information block in a slot, where the information block includes a synchronization sequence and system information, and the system information includes position information of a network device and random access configuration information. The transceiver unit is further configured to initiate, based on the system information, random access to a cell synchronized based on the synchronization sequence.

Optionally, the transceiver unit is further configured to receive a random access response sent by the network device using a beam with a first beam width; the transceiver unit is further configured to send a message 3 in a random access procedure; the transceiver unit is further configured to receive a message 4 sent by the network device using a beam with the first beam width; and the transceiver unit is further configured to send a message 5 in the random access procedure.

Optionally, the plurality of information blocks are consecutive in time domain.

According to a sixth aspect, a communication apparatus is provided. The communication apparatus may implement the method in the second aspect. For example, the communication apparatus may be a chip or a terminal device. The foregoing method may be implemented by software, hardware, or hardware executing corresponding software.

In a possible implementation, the apparatus includes a transceiver unit and a processing unit. The transceiver unit is configured to send an information block in a slot, where the information block includes a synchronization sequence and system information, and the system information includes position information of a network device and random access configuration information. The transceiver unit is further configured to receive, based on the system information, random access initiated to a cell synchronized based on the synchronization sequence.

Optionally, the transceiver unit is further configured to send a random access response using a beam with a first beam width; the transceiver unit is further configured to receive a message 3 in a random access procedure on the beam with the first beam width; the transceiver unit is further configured to send a message 4 on a beam with the first beam width; and the transceiver unit is further configured to receive a message 5 in the random access procedure on the first beam width.

With reference to any one of the fifth aspect, the sixth aspect, or the implementations of the fifth aspect or the sixth aspect, optionally, the information block is carried on a first beam, and a beam width of the first beam is greater than or equal to the first beam width.

With reference to any one of the fifth aspect, the sixth aspect, or the implementations of the fifth aspect or the sixth aspect, optionally, a network coverage area corresponding to the first beam is greater than or equal to a coverage area of a beam sent using the first beam width.

With reference to any one of the fifth aspect, the sixth aspect, or the implementations of the fifth aspect or the sixth aspect, optionally, the information block is a plurality of information blocks, the plurality of information blocks are consecutive in time domain, and the plurality of information blocks correspond to a plurality of network coverage areas.

With reference to any one of the fifth aspect, the sixth aspect, or the implementations of the fifth aspect or the sixth aspect, optionally, bandwidth corresponding to the information block is less than or equal to 20 resource blocks.

With reference to any one of the fifth aspect, the sixth aspect, or the implementations of the fifth aspect or the sixth aspect, optionally, in the information block, the synchronization sequence is consecutive with the system information in time domain, and a time domain position of the synchronization sequence precedes a time domain position of the system information.

With reference to any one of the fifth aspect, the sixth aspect, or the implementations of the fifth aspect or the sixth aspect, optionally, the information block further includes a plurality of demodulation reference signals, and the plurality of demodulation reference signals are used to demodulate the system information.

With reference to any one of the fifth aspect, the sixth aspect, or the implementations of the fifth aspect or the sixth aspect, optionally, the information block is carried on a physical downlink shared channel.

With reference to any one of the fifth aspect, the sixth aspect, or the implementations of the fifth aspect or the sixth aspect, optionally, the system information further includes at least one of the following: an uplink transmission common configuration, a downlink transmission common configuration, a quantity of information blocks, a period of the information block, or a pattern of the information block.

According to a seventh aspect, a communication apparatus is provided. The communication apparatus may implement the method in the third aspect. For example, the communication apparatus may be a chip or a terminal device. The foregoing method may be implemented by software, hardware, or hardware executing corresponding software.

In a possible implementation, the apparatus includes a transceiver unit and a processing unit. The transceiver unit is configured to receive at least one information block in a slot, where each of the at least one information block includes position information of a network device and random access configuration information, the information block is spaced N time units apart from a synchronization signal/broadcast signal block, and N is an integer greater than or equal to 0. The transceiver unit is further configured to initiate, based on each information block, random access to a cell synchronized based on the synchronization signal/broadcast signal block.

Optionally, the transceiver unit is further configured to receive a random access response sent by the network device using a beam with a first beam width; the transceiver unit is further configured to send a message 3 in a random access procedure; the transceiver unit is further configured to receive a message 4 sent by the network device using a beam with the first beam width; and the transceiver unit is further configured to send a message 5 in the random access procedure.

Optionally, the at least one information block is consecutive in time domain.

According to an eighth aspect, a communication apparatus is provided. The communication apparatus may implement the method in the fourth aspect. For example, the communication apparatus may be a chip or a terminal device. The foregoing method may be implemented by software, hardware, or hardware executing corresponding software.

In a possible implementation, the apparatus includes a transceiver unit and a processing unit. The transceiver unit is configured to send at least one information block in a slot, where each of the at least one information block includes position information of a network device and random access configuration information, the information block is spaced N time units apart from a synchronization signal/broadcast signal block, and N is an integer greater than or equal to 0. The transceiver unit is further configured to receive, based on each information block, random access initiated to a cell synchronized based on the synchronization signal/broadcast signal block.

Optionally, the transceiver unit is further configured to send a random access response using a beam with a first beam width; the transceiver unit is further configured to receive a message 3 in a random access procedure on the beam with the first beam width; the transceiver unit is further configured to send a message 4 on a beam with the first beam width; and the transceiver unit is further configured to receive a message 5 in the random access procedure on the first beam width.

Optionally, the at least one information block is consecutive in time domain, and the at least one information block respectively corresponds to at least one network coverage area.

With reference to any one of the seventh aspect, the eighth aspect, or the implementations of the seventh aspect or the eighth aspect, optionally, the synchronization signal/broadcast signal block indicates a time-frequency resource position of each information block.

With reference to any one of the seventh aspect, the eighth aspect, or the implementations of the seventh aspect or the eighth aspect, optionally, the synchronization signal/broadcast signal block indicates an index of a time domain offset and/or an index of a frequency domain offset, the time domain offset is a time domain offset between each information block and the synchronization signal/broadcast signal block corresponding to each information block, and the frequency domain offset is an offset of a frequency domain start or end position between each information block and the synchronization signal/broadcast signal block corresponding to each information block. For example, the time domain offset may be a slot offset.

With reference to any one of the seventh aspect, the eighth aspect, or the implementations of the seventh aspect or the eighth aspect, optionally, each information block is carried on a first beam, and a beam width of the first beam is greater than or equal to the first beam width.

With reference to any one of the seventh aspect, the eighth aspect, or the implementations of the seventh aspect or the eighth aspect, optionally, a network coverage area corresponding to the first beam is greater than or equal to a coverage area of a beam sent using the first beam width.

With reference to any one of the seventh aspect, the eighth aspect, or the implementations of the seventh aspect or the eighth aspect, optionally, bandwidth corresponding to each information block is less than or equal to 20 resource blocks.

With reference to any one of the seventh aspect, the eighth aspect, or the implementations of the seventh aspect or the eighth aspect, optionally, each information block further includes a plurality of demodulation reference signals, and the plurality of demodulation reference signals are used to demodulate the system information.

With reference to any one of the seventh aspect, the eighth aspect, or the implementations of the seventh aspect or the eighth aspect, optionally, the at least one information block is carried on a physical downlink shared channel.

With reference to any one of the seventh aspect, the eighth aspect, or the implementations of the seventh aspect or the eighth aspect, optionally, each information block further includes at least one of the following: an uplink transmission common configuration, a downlink transmission common configuration, a quantity of information blocks, a period of the information block, and a pattern of the information block.

In another possible implementation, the communication apparatus in any of the fifth aspect to the eighth aspect is configured to perform the method in the foregoing aspects and the possible implementations of the foregoing aspects.

In another possible implementation, the communication apparatus in any of the fifth aspect to the eighth aspect includes a processor coupled to a memory. The processor is configured to support the apparatus in performing a corresponding function in the foregoing communication method. The memory is configured to be coupled to the processor, and the memory stores a computer program (or computer-executable instructions) and/or data necessary for the apparatus. Optionally, the communication apparatus may further include a communication interface, configured to support communication between the apparatus and another network element, for example, transmitting or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

In another possible implementation, the communication apparatus in the fifth aspect to the eighth aspect includes a processor and a transceiver apparatus. The processor is coupled to the transceiver apparatus. The processor is configured to execute a computer program or instructions, to control the transceiver apparatus to send and receive information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is the chip, the transceiver apparatus is a transceiver circuit or an input/output interface.

When the communication apparatus in the fifth aspect to the eighth aspect is a chip, a sending unit may be an output unit, for example, an output circuit or a communication interface, and a receiving unit may be an input unit, for example, an input circuit or a communication interface. When the communication apparatus is a terminal device, a sending unit may be a transmitter or a transmitter machine, and the receiving unit may be a receiver or a receiver machine.

According to a ninth aspect, a communication system is provided. The communication system includes the communication apparatus according to any one of the fifth aspect or the implementations of the fifth aspect and at least one communication apparatus according to any one of the sixth aspect or the implementations of the sixth aspect.

According to a tenth aspect, a communication system is provided. The communication system includes the communication apparatus according to any one of the seventh aspect or the implementations of the seventh aspect and at least one communication apparatus according to any one of the eighth aspect or the implementations of the eighth aspect.

According to an eleventh aspect, a computer-readable storage medium is provided. The computer-readable storage medium stores a computer program or instructions. When the program or the instructions are executed by a processor, the method according to any one of the first aspect or the implementations of the first aspect is implemented, or the method according to any one of the second aspect or the implementations of the second aspect is implemented, or the method according to any one of the third aspect or the implementations of the third aspect is implemented, or the method according to any one of the fourth aspect or the implementations of the fourth aspect is implemented.

According to a twelfth aspect, a computer program product is provided. When the computer program product is executed on a computing device, the method according to any one of the first aspect or the implementations of the first aspect is implemented, or the method according to any one of the second aspect or the implementations of the second aspect is implemented, or the method according to any one of the third aspect or the implementations of the third aspect is implemented, or the method according to any one of the fourth aspect or the implementations of the fourth aspect is implemented.

### BRIEF DESCRIPTION OF DRAWINGS

FIG. 1 is a simplified diagram of a wireless communication system according to an embodiment of this application;
FIG. 2A is a diagram of an NTN scenario based on a transparent payload;
FIG. 2B is a diagram of an NTN scenario based on a regenerative payload;
FIG. 3 is a diagram of an ultra-wide coverage scenario;
FIG. 4 is a schematic flowchart of an initial access phase and a service data transmission phase of NR;
FIG. 5 is a diagram of a format of an SSB in NR;
FIG. 6 is a schematic flowchart of a communication method according to an embodiment of this application;
FIG. 7 is a diagram of a format of an information block according to an embodiment of this application;
FIG. 8 is a diagram of an access and data transmission procedure according to an embodiment of this application;
FIG. 9 is a diagram of a beam according to an embodiment of this application;
FIG. 10A and FIG. 10B are diagrams of transmission of a plurality of information blocks according to an embodiment of this application;
FIG. 11 is a schematic flowchart of another communication method according to an embodiment of this application;
FIG. 12 is a diagram of a format of an information block in a single slot according to an embodiment of this application;
FIG. 13 is a diagram of a format of an information block and an SSB according to an embodiment of this application;
FIG. 14 is a diagram of another format of an information block and an SSB according to an embodiment of this application;
FIG. 15 is a diagram of still another format of an information block and an SSB according to an embodiment of this application;
FIG. 16 is a diagram of still another format of an information block and an SSB according to an embodiment of this application;
FIG. 17 is a diagram of still another format of an information block and an SSB according to an embodiment of this application;
FIG. 18A and FIG. 18B are diagrams of still another format of an information block and an SSB according to an embodiment of this application;
FIG. 19A and FIG. 19B are diagrams of still another format of an information block and an SSB according to an embodiment of this application;
FIG. 20 is a diagram of a structure of a communication apparatus according to an embodiment of this application; and
FIG. 21 is a diagram of a structure of another communication apparatus according to an embodiment of this application.

### DESCRIPTION OF EMBODIMENTS

The following describes embodiments of this application with reference to the accompanying drawings in embodiments of this application.

Technical solutions provided in this application may be applied to various communication systems. For example, the communication system may be a fourth generation (4^{th} generation, 4G) communication system (for example, a long term evolution (long term evolution, LTE) system), a fifth generation (5^{th} generation, 5G) communication system, a worldwide interoperability for microwave access (worldwide interoperability for microwave access, WiMAX) or a wireless local area network (wireless local area network, WLAN) system, a converged system of multiple systems, a future communication system, for example, a sixth generation (6^{th} generation, 6G) communication system, or the like. The 5G communication system may also be referred to as a new radio (new radio, NR) system.

A network element in a communication system may send a signal to another network element or receive a signal from another network element. The signal may include information, signaling, data, or the like. The network element may be alternatively replaced with an entity, a network entity, a device, a terminal device, a communication module, a node, a communication node, or the like. In this application, the network element is used as an example for description. For example, the communication system may include at least one terminal device and at least one access network device. An access network device may send a downlink signal to a terminal device, and/or a terminal device may send an uplink signal to an access network device. In addition, it may be understood that, if the communication system includes a plurality of terminal devices, the plurality of terminal devices may also send signals to each other. That is, both a signal sending network element and a signal receiving network element may be terminal devices.

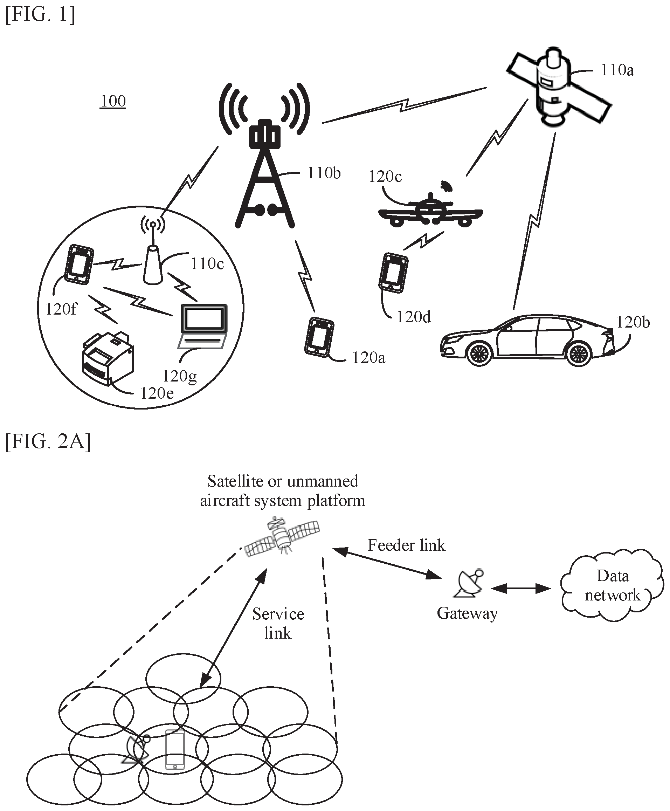

A communication method provided in embodiments of this application may be applied to a wireless communication system like 5G, 6G, or satellite communication. FIG. 1 is a simplified diagram of a wireless communication system according to an embodiment of this application. As shown in FIG. 1, the wireless communication system includes a radio access network 100. The radio access network 100 may be a next generation (for example, 6G or higher-version) radio access network, or a conventional (for example, 5G or 4G) radio access network. One or more terminal devices (120a to 120g, collectively referred to as 120) may be connected to each other or connected to one or more network devices (110a to 110c, collectively referred to as 110) in the radio access network 100 in a wired or wireless connection manner. Optionally, FIG. 1 is merely a diagram. The wireless communication system may further include another device, for example, may further include a core network device, a wireless relay device, and/or a wireless backhaul device, which are not shown in FIG. 1.

Optionally, during actual application, the wireless communication system may include a plurality of network devices (also referred to as access network devices), or may include a plurality of terminal devices. One network device may serve one or more terminal devices. One terminal device may also access one or more network devices. A quantity of terminal devices and a quantity of network devices that are included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may cover various following names in a broad sense, or may be replaced with the following names, for example, a radio access network (radio access network, RAN) node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmission reception point, TRP), a transmission point (transmission point, TP), a master-eNB (master-eNB, MeNB), a secondary eNB (secondary eNB, SeNB), a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit-control plane (central unit-control plane, CU-CP) node, a central unit-user plane (central unit-user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a function of the base station in device-to-device (device-to-device, D2D), vehicle-to-everything (vehicle-to-everything, V2X), and machine-to-machine (machine-to-machine, M2M) communication, a network side device in a 6G network, a device that takes on a function of the base station in a future communication system, or the like. The network device may support networks using a same access technology or different access technologies. A specific technology and a specific device form that are used for the network device are not limited in embodiments of this application.

The network device may be fixed or mobile. For example, base stations 110b and 110c are stationary, and are responsible for wireless transmission and reception in one or more cells from the terminal device 120. A helicopter or an unmanned aircraft 120c shown in FIG. 1 may be configured to serve as a mobile base station, and one or more cells may move based on a location of the mobile base station 120c. In another example, the helicopter or the unmanned aircraft (120c) may be configured to serve as a terminal device communicating with the satellite base station 110a.

In this application, a communication apparatus configured to implement functions of the access network may be an access network device, a network device having a part of functions of the access network, or an apparatus that can support implementation of the functions of the access network, for example, a chip system, a hardware circuit, a software module, or a hardware circuit plus a software module. The apparatus may be mounted in the access network device or used in cooperation with the access network device. In the method in this application, an example in which the communication apparatus configured to implement the functions of the access network device is an access network device is used for description.

The terminal device may be an entity, for example, a mobile phone, that is configured to receive or transmit a signal on a user side. The terminal device may be configured to connect to a person, an object, and a machine. The terminal device may communicate with one or more core networks via the network device. The terminal device includes a handheld device with a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), the internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, a smart city, an unmanned aircraft, a robot, remote sensing, passive sensing, positioning, navigation and tracking, and autonomous delivery and mobility. Some examples of the terminal device 120 are 3GPP standard user equipment (user equipment, UE), a fixed device, a mobile device, a handheld device, a wearable device, a cellular phone, a smartphone, a session initiated protocol (session initiated protocol, SIP) phone, a notebook computer, a personal computer, a smart book, a vehicle, a satellite, a global positioning system (global positioning system, GPS) device, a target tracking device, an unmanned aircraft, a helicopter, a flight vehicle, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a VR device, an AR device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal such as a smart fuel dispenser in a smart city (smart city), a terminal device on a high-speed rail, and a wireless terminal such as a smart speaker, a smart coffee machine, or a smart printer in a smart home (smart home). The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal device, user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device, a general-purpose device, or the like. A specific technology and a specific device form that are used by the terminal device are not limited in embodiments of this application.

Optionally, the terminal device may be configured to serve as a base station. For example, the UE may serve as a scheduling entity that provides sidelink signals between UE in V2X, D2D, P2P, or the like. As shown in FIG. 1, a cellular phone 120a and an automobile 120b communicate with each other by using sidelink signals. The cellular phone 120a communicates with a smart home device 120e without relaying a communication signal via the base station 110b.

In this application, a communication apparatus configured to implement functions of the terminal device may be a terminal device, a terminal device having a part of functions of the terminal device, or an apparatus that can support implementation of the functions of the terminal device, for example, a chip system. The apparatus may be mounted in the terminal device or used in cooperation with the terminal device. In this application, the chip system may include a chip, or may include a chip and another discrete component. In the technical solutions provided in this application, an example in which the communication apparatus is a terminal device or UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

In some deployments, the network device mentioned in embodiments of this application may be a device including a CU or a DU, a device including a CU and a DU, or a device including a CU-control plane (CU-CP) node, a CU-user plane (CU-UP) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or a radio unit (radio unit, RU). The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, the interface performs transfer of a part of downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, split manners between the DU and RU are different, which correspond to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, with RE demapping as a splitting point, the DU is configured to implement the demapping and one or more functions before the demapping (that is, one or more of the following functions: decoding, de-rate matching, descrambling, demodulation, inverse discrete Fourier transform (inverse discrete Fourier transform, IDFT), channel equalization, or the RE demapping), and another function after the demapping (for example, one or more of digital BF or FFT/CP removal) is moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an open-central unit (open-central unit, O-CU), the DU may also be referred to as an open-distributed unit (open-distributed unit, O-DU), the CU-CP may also be referred to as an open-central unit-control plane (open-central unit-control plane, O-CU-CP), the CU-UP may also be referred to as an open-central unit-user plane (open-central unit-user plane, O-CU-UP), and the RU may also be referred to as an open-radio unit (open-radio unit, O-RU). Any unit in the CU (or the CU-CP or the CU-UP), the DU, and the RU in this application may be implemented by using a software module, a hardware module, or a combination of the software module and the hardware module.

In embodiments of this application, an apparatus configured to implement the function of the network device may be a network device, or an apparatus that can support the network device in implementing the function, for example, a chip system, a hardware circuit, a software module, or a combination of a hardware circuit and a software module. The apparatus may be mounted in the network device or used in combination with the network device. In embodiments of this application, an example in which the apparatus configured to implement the function of the network device is the network device is merely used for description, and constitutes no limitation on the solutions in embodiments of this application.

It may be understood that this application may be applied between an access network device and a terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between a network device and a terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

It should be understood that quantities and types of devices in the communication system shown in FIG. 1 are merely used as an example. This application is not limited thereto. During actual application, the communication system may further include more terminal devices and more access network devices, and may further include another network element, for example, may include a core network device and/or a network element configured to implement an artificial intelligence function.

It may be understood that all or some of functions implemented by one or more of the terminal device, the access network device, the core network device, or the network element configured to implement the artificial intelligence function may be virtualized, to be specific, implemented by one or more of a dedicated processor or a general-purpose processor and a corresponding software module. Because the terminal device and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

The following first describes several concepts in this application.

### (1) NTN network.

The NTN network is a network that uses radio frequency resources on a satellite (or an unmanned aircraft system (unmanned aircraft system, UAS) platform and a high-altitude platform station (high-altitude platform station, HAPS)). Compared with a terrestrial cellular network (for example, a 5G mobile communication system), the NTN network has characteristics of wide coverage, a low latency, broadbandization, and low costs. As a supplement and extension of a terrestrial network, the NTN network can implement wide-area seamless coverage that cannot be implemented by a wired telephone network and a terrestrial mobile communication network, to effectively resolve an internet access problem in areas with insufficient communication infrastructure. A large quantity of satellites are deployed in a near-earth orbit, and a round-trip transmission latency of data between the satellite and a terrestrial terminal device is greatly reduced to a low latency at a level of dozens of milliseconds. Use of technologies such as high frequency bands, multi-point beams, and frequency reuse significantly improves a communication capability of the satellites, reduces costs per unit of bandwidth, and can meet requirements of services with high information rates. Compared with communication infrastructure such as terrestrial 5G base stations and submarine fiber optic cables, the NTN has a significant advantage in costs. Modern small satellites have low research and development and manufacturing costs, and a software definition technology can further prolong service life of in-orbit satellites. The NTN network may be applied to scenarios such as global coverage (such as remote areas and ocean-going ships), emergency relief (such as disaster monitoring and emergency communication), internet of everything, and high-speed movement (such as high-speed rails and airplanes).

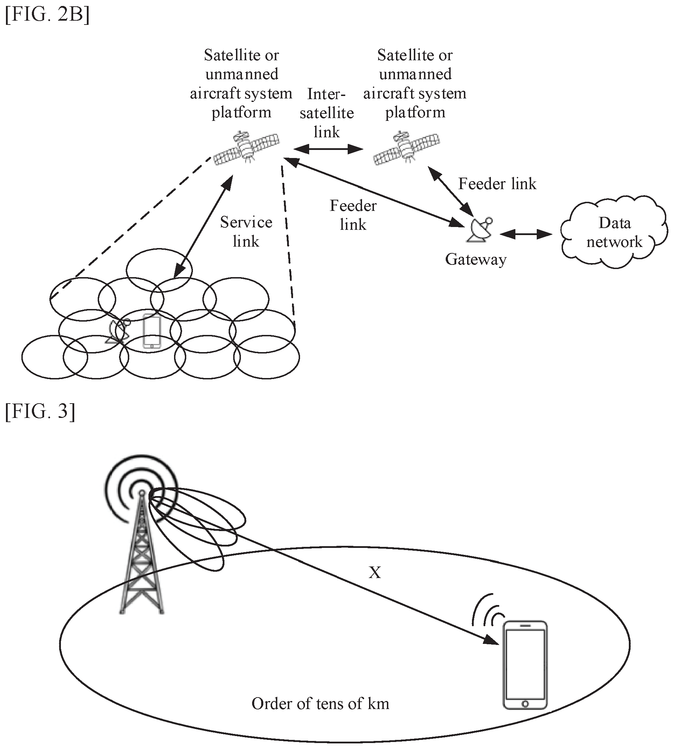

Typical scenarios for the NTN network to provide terminal device access are a transparent payload (transparent payload) and a regenerative payload (regenerative payload). FIG. 2A is a diagram of an NTN scenario based on a transparent payload. The transparent payload is a payload that changes a frequency carrier of an uplink radio frequency signal and filters and amplifies the signal before downlink transmission. This payload has only a radio frequency processing unit and does not have processing such as baseband demodulation or decoding. Therefore, a signal waveform is unchanged and is repeated. FIG. 2B is a diagram of an NTN scenario based on a regenerative payload. The regenerative payload is a payload that transforms and amplifies an uplink radio frequency (radio frequency, RF) signal before the uplink radio frequency signal is transmitted on a downlink. Transformation of a signal refers to digital processing, and may include demodulation, decoding, re-encoding, re-modulation, and/or filtering. This is equivalent to the satellite (or the UAS platform) having all or some functions of a base station.

The NTN network generally has the following elements:
(1) There are one or more gateways (gateways) that connect the NTN network and a common data network (common data network).
(2) A feeder link (feeder link) is a radio link between the gateway and the satellite (or the UAS platform).
(3) A service link (service link) is a radio link between a terminal device and the satellite (or the UAS platform).
(4) The satellite (or the UAS platform) can implement the transparent payload and the regenerative payload.
(5) Whether there is an inter-satellite link (inter-satellite link, ISL) on a satellite constellation is optional. The inter-satellite link requires that a satellite is a regenerative payload (that is, if there is the inter-satellite link, the satellite needs to be the regenerative payload). The ISL may operate at an RF frequency or an optical band.
(6) The terminal device is served by a satellite (or a UAS platform) in a target service area.

### (2) Ultra-wide coverage:

6G and future communication systems may be used in ultra-wide coverage scenarios. The ultra-wide coverage scenario has the following characteristics:

First, in an ultra-wide coverage scenario, a transmission distance is long, a path loss is large, and an access network device and a terminal device side have limited powers.

Second, a position of the access network device is relatively high, and a channel between the access network device and the terminal device approaches a line of sight (line of sight, LOS).

Third, the ultra-wide coverage needs to meet access requirements of terminal devices within full coverage and ensure performance of terminal devices.

In this context, there are multiple scenarios for ultra-wide coverage. For example, in a satellite scenario, a satellite has a large coverage area. Another scenario is ultra-large ground coverage on the order of tens of km. FIG. 3 is a diagram of an ultra-wide coverage scenario.

Satellites are not easily susceptible to natural disasters or external forces. Therefore, a satellite may be used as an access network device (for example, a base station) of a mobile communication system to provide a communication service for some regions such as an ocean and a forest. Different from a ground base station, the satellite has a higher moving speed and a longer signal propagation distance, resulting in a greater signal path loss of the satellite used as a base station. A communication mechanism designed for a terminal device and a ground base station in a current mobile communication system cannot be directly applied between the terminal device and a satellite base station. Therefore, to help the satellite serve as a base station to provide a communication service for a terminal device, how to overcome a signal path loss to improve coverage of a signal for communication between the terminal device and the satellite base station, how to ensure that the terminal device stably completes initial access, and how to reduce an access delay are urgent problems that need to be resolved currently.

To support wider service coverage, an access network device may need to provide a network service for a larger communication region. Using a non-terrestrial network as an example, in an NTN communication system, each satellite/high-altitude platform/base station can generally cover a large area. Under a given link budget and system resources, a satellite network side improves overall satellite coverage by increasing a coverage area of a single beam through a beam design. Due to a limited coverage area of a single beam, a single satellite still requires a large quantity of beams to achieve full coverage.

### (3) Initial access of a terminal device

In an initial access phase, a satellite, as a network device, needs to sequentially scan all beams, and configure a random access resource for a terminal device. A random access procedure is generally a process from sending of a random access preamble (random access preamble, which may be referred to as a preamble for short) by a terminal device for starting to attempt to access a network device to establishment of a basic signaling connection between the terminal device and the network device. Currently, the network device may broadcast different SSBs for different communication regions, and distinguish the SSBs using SSB indexes. Generally, different SSB indexes represent that downlink synchronization signals in different beam directions cover and serve different areas. After receiving an SSB, the terminal device completes timing synchronization, determines a time-frequency position of SIB1 based on an information indication in the SSB, and parses SIB1 to obtain cell information. SIB19 is detected based on a search space of SIB19 configured in SIB1 and data is parsed to obtain ephemeris information of the satellite. After obtaining the cell information and/or the ephemeris information, the terminal device sends a random access preamble on a corresponding uplink resource based on configuration information and an SSB index. The network device may determine, through the received random access preamble and the corresponding uplink resource, an area in which the terminal device is located, and establish a connection to the terminal device.

In current NR technology, an initial access phase and a service data transmission phases of NR are specified as follows:

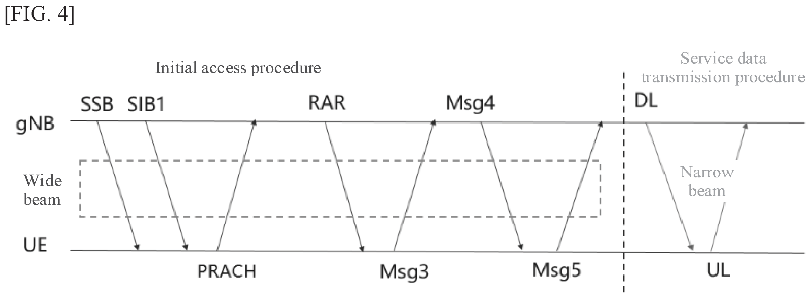

FIG. 4 is a schematic flowchart of an initial access phase and a service data transmission phase of NR. In the figure, a four-step random access procedures is used as an example. In an actual use process, a two-step random access procedure may be alternatively used. Specifically, the procedure is as follows:
1. Initial access phase: The network device (for example, a gNB) sends an SSB synchronization channel using a wide beam, and another channel is associated with an SSB beam.

Step 1: The terminal device receives SIB1 based on the SSB, and obtains cell information, random access occasion (random occasion, RO) resource configuration information, and the like from SIB1. Further, the terminal device determines, based on an SSB index and the RO resource configuration information, an RO resource used by the terminal device, and sends a physical random access channel (physical random access channel, PRACH) on the RO resource associated with the SSB to initiate a random access request.

Step 2: The network device receives the PRACH, sends a random access response (random access response, RAR) to the terminal device, and schedules, using the RAR, the terminal device to send a message 3 (Msg3) in a random access procedure on a corresponding time-frequency resource, to initiate a radio resource control (radio resource control, RRC) setup request (RRCSetupRequest).

Step 3: After receiving Msg3, the network device sends a message 4 (Msg4) in the random access procedure to the terminal device to perform RRC setup (RRCSetup).

Step 4: After receiving the message 4 (Msg4), the terminal device sends a message 5 (Msg5) and the like in the random access procedure to complete the initial access procedure.

2. Service data transmission phase: The network device obtains channel state information (channel state information, CSI) or a user position and uses narrow beams for service data transmission, thereby improving a link budget and a communication rate.

However, if reference is made to an initial access procedure of NR, in the initial access procedure in the ultra-wide coverage scenario, a same wide beam is also used for channel sending of SIB1/RAR/Msg4 and an SSB, and a link budget problem exists. The wide beam can ensure comprehensive coverage in the access procedure, but a gain of the wide beam is low. However, a demodulation threshold of a data channel for necessary signaling such as SIB1, a RAR, or Msg4 in the initial access procedure is higher than that of the SSB. In summary, using a wide beam to send an SSB can ensure demodulation performance, whereas sending on a PDSCH has insufficient demodulation performance.

An SSB message needs to be obtained first, and then cell information needs to be obtained from SIB1. Two steps are required to obtain the information, which causes a delay and affects efficiency.

A format of an SSB in NR is as follows:

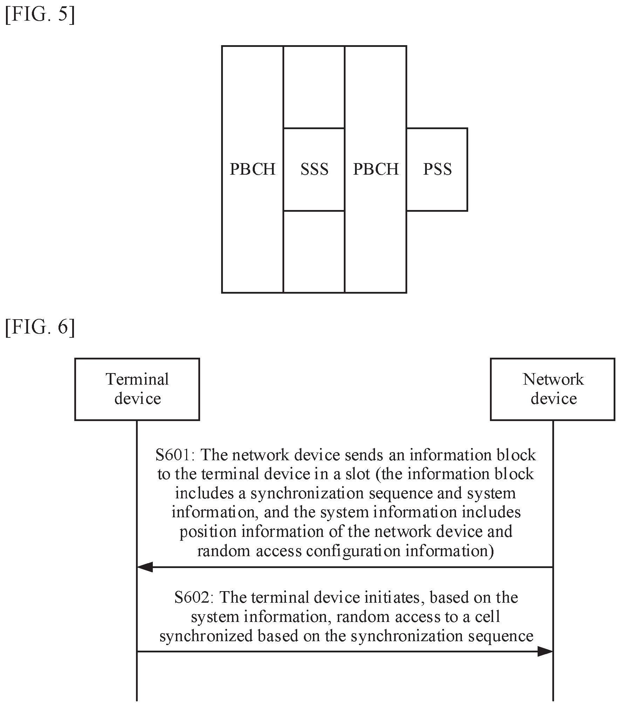

FIG. 5 is a diagram of a format of an SSB in NR. The SSB in NR includes several parts: a primary synchronization signal (primary synchronization signal, PSS), a secondary synchronization signal (secondary synchronization signal, SSS), and a physical broadcast channel (physical broadcast channel, PBCH) (master information block (main information block, MIB)).

The PSS is a sequence, occupies the first symbol of the SSB, and has 127 resource elements (resource elements, REs).

The SSS is a sequence, occupies the third symbol of the SSB, and has 127 RE resources.

The PBCH is a control channel, and is transmitted using a short code in a Polar coding manner. The PBCH occupies the second to fourth symbols of the SSB, and occupies 240 * 2 + 48 * 2 = 576 REs, of which 25% are demodulation reference signals (demodulation reference signals, DMRSs). Available resources are 576 * 0.75 = 432 REs, and are modulated using quadrature phase shift keying (quadrature phase shift keying, QPSK) into 432 * 2 = 864 bits (after encoding). Effective bits are 24 (MIB) + 8 (PBCH payload) + 24 (CRC) = 56 bits, and a code rate = 32/864 = 0.037.

Specific bit information in the PBCH is classified into master information block (major information block, MIB) information generated by a higher layer and physical broadcast channel payload (PBCH payload) information generated at a physical layer. Specifically, specific information in the MIB includes six most significant bits of a system frame number, a time-frequency position of SIB1, a DMRS configuration, and the like. The 8-bit information in the PBCH payload includes four least significant bits of the system frame number, an SSB index, and a half-frame indication.

A format of an SSB in LTE is as follows:
The SSB in LTE also includes a PSS, an SSS, and a PBCH.

The PSS is a ZC sequence with a length of 63, and occupies six resource blocks (resource blocks, RBs). In frequency division duplexing (frequency division duplexing, FDD), the PSS is sent on the last orthogonal frequency division multiplexing (orthogonal frequency division multiplexing, OFDM) symbols of the first slots of Subframes 0 and 5, and in time division duplexing (time division duplexing, TDD), the PSS is sent on the third OFDM symbols of Subframes 1 and 6.

The SSS is an M sequence. In FDD, the SSS is one symbol ahead of the PSS. In TDD, the SSS is three symbols ahead of the PSS.

The PBCH is transmitted using a broadcast channel (broadcast channel, BCH), with an information element (IE) named BCCH-BCH-Message. Specific information in the MIB includes downlink system bandwidth (dl-Bandwidth), a physical hybrid automatic repeat request indicator channel (physical hybrid ARQ indicator channel, PHICH) configuration (phich-Config), a system frame number (systemFrameNumber), and one spare bit (spare), with a total of 24 bits.

However, regardless of the foregoing SSB design in NR or the foregoing LTE SSB design, the MIB is transmitted by using a control channel, and a quantity of carried bits is limited, and is not sufficient for an access procedure.

In view of this, this application provides a communication solution. System information including position information of a network device and a synchronization sequence are sent in a same information block, so that a delay in initiating random access by a terminal device can be reduced, and efficiency of random access can be improved.

FIG. 6 is a schematic flowchart of a communication method according to an embodiment of this application. For example, the method may include the following steps.

S601: A network device sends an information block to a terminal device in a slot. Correspondingly, the terminal device receives the information block.

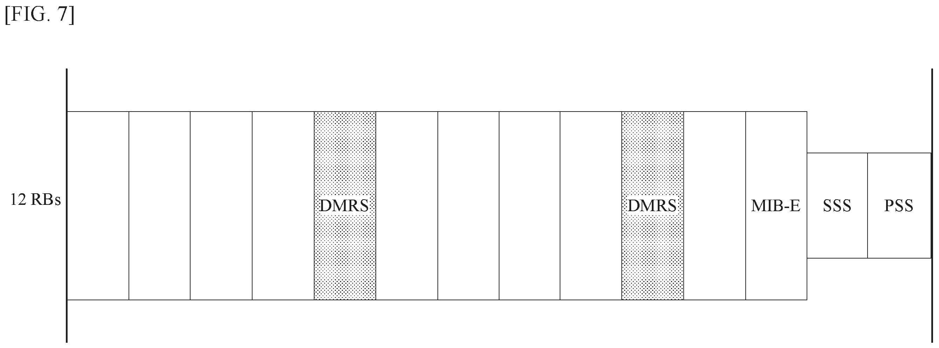

FIG. 7 is a diagram of a format of an information block according to an embodiment of this application. The information block includes a synchronization sequence and system information. The synchronization sequence includes a PSS and an SSS. The system information carries information used by the terminal device to initiate random access. For example, a quantity of bits of the system information may be around 200. The system information is different from an existing MIB in a PBCH, and may be referred to as an extended master information block (extended-major information block, MIB-E). For example, the system information includes position information of the network device and random access configuration information (rach-ConfigCommon).

Further, the system information may further include at least one of the following: an uplink transmission common configuration (uplinkConfigCommonSIB/BWP-UplinkCommon), a downlink transmission common configuration (DownlinkConfigCommonSIB/BWP-DownlinkCommon), a quantity of information blocks, a period of the information block, and a pattern of the information block.

Further, the information block may further include a plurality of DMRSs, and the plurality of DMRSs are used to demodulate the system information, channel estimation, time-frequency offset estimation, and the like in the information block. Considering that a time-frequency offset may be excessively large in an ultra-wide coverage scenario, a plurality of DMRSs need to be used for joint demodulation to optimize performance and improve transmission performance. As shown in FIG. 7, for example, the information block includes two DMRSs. The figure is merely an example, and positions of the two DMRSs may be any two symbols. In an example, the plurality of DMRSs may be located between system information. In another example, the DMRS may be alternatively located between the synchronization sequence and the system information. In addition, a quantity of DMRSs may also be extended, and may be 1, 2, 3, or more. The quantity may be selected and configured based on network performance, or may be pre-configured or agreed in a protocol based on network performance.

In an implementation, in the information block, the synchronization sequence and the system information are consecutive in time domain, and a time domain position of the synchronization sequence precedes a time domain position of the system information. Still refer to FIG. 7. The information block is carried in a slot. The PSS occupies the first symbol in the slot, and the SSS occupies the second symbol in the slot, both transmitted using sequences. The sequences for the PSS and the SSS are used for timing and synchronization, and are placed at the beginning of the slot, so that sequence detection can be completed as soon as possible. The PSS and the SSS are configured in a centralized manner, so that more consecutive time domain resources can be reserved for subsequent transmission of system information. The system information occupies the third to fourteenth symbols in the slot, and the system information occupies 12 consecutive symbols in time domain. Therefore, more resources may be used to transmit the system information required for access, thereby increasing a quantity of information bits that can be transmitted.

In an implementation, bandwidth corresponding to the information block is less than or equal to 20 resource blocks. For example, an SCS is 30 kHz. Bandwidth corresponding to the information block is 12 RBs, and corresponds to small bandwidth of 4.32 MHz. In the implementation, the system information occupies small bandwidth in frequency domain, and a link budget for downlink transmission may be increased in a power aggregation manner, thereby increasing a quantity of information bits that can be transmitted. A MIB in NR generally occupies 20 RBs, and bandwidth of 7.2 MHz is required when the SCS is 30 kHz.

In an implementation, the information block is carried on a physical downlink shared channel (physical downlink shared channel, PDSCH). In the implementation, the information block in this embodiment is carried using a PDSCH. Compared with existing transmission of a MIB using a PBCH control channel, more transmitted bits can be carried. For example, the PDSCH may carry thousands of bits, whereas the PBCH can carry tens of bits.

In this embodiment, without requiring two steps of obtaining information as in existing technologies, the synchronization sequence and the system information are included in one information block and sent to the terminal device simultaneously, and the terminal device may receive the synchronization sequence and the system information simultaneously, so that an access delay of the terminal device can be reduced.

S602: The terminal device initiates, based on the system information, random access to a cell synchronized based on the synchronization sequence. Correspondingly, the network device receives a random access request.

After receiving the information block, the terminal device parses the information block to obtain the synchronization sequence and the system information in the information block. The terminal device may synchronize with a cell in the network device based on the synchronization sequence. The terminal device then initiates, based on the system information, random access to the cell synchronized based on the synchronization sequence. The initiating random access is specifically sending, by the terminal device, the random access request to the network device. The random access request is carried on a physical random access channel (physical random access channel, PRACH). The random access request includes a random access preamble (preamble). The random access request may also be referred to as a message 1 (message 1, Msg1).

Further, after receiving the random access request sent by the terminal device, the network device sends a system information block-reserved (system information block-reserved, SIB-R) and a random access response to the terminal device using a beam with a first beam width. After receiving the random access response, the terminal device sends a message 3 in the random access procedure to the network device. After receiving the message 3 in the random access procedure on the beam with the first beam width, the network device sends a message 4 to the terminal device using the beam with the first beam width. After receiving the message 4, the terminal device sends a message 5 in the random access procedure to the network device. Correspondingly, the network device receives the message 5 in the random access procedure on the beam with the first beam width.

The SIB-R is remaining system information other than the system information in the information block in existing SIB1. In other words, the system information in this embodiment carries information required by the terminal device to initiate random access, and compared with SIB1, an amount of carried information is reduced, thereby improving transmission performance. For example, when a same time-frequency resource is used, a quantity of transmitted bits is reduced, which is equivalent to reducing a transmission code rate, thereby improving transmission performance. For example, when the quantity of transmitted bits is reduced, occupied time-frequency resources can also be reduced, thereby reducing resource occupation overheads and improving performance. Alternatively, frequency domain resource occupation may be reduced, so that transmission performance can be further improved in a manner such as power aggregation.

In an implementation, the information block is carried on a first beam, and a beam width of the first beam is greater than or equal to the first beam width. That is, the information block is sent using a wide beam, so that coverage performance can be improved.

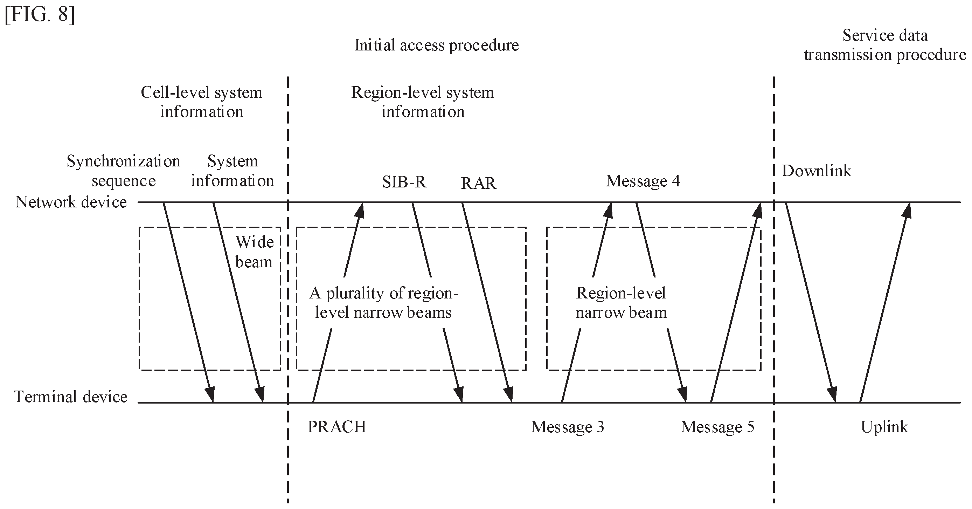

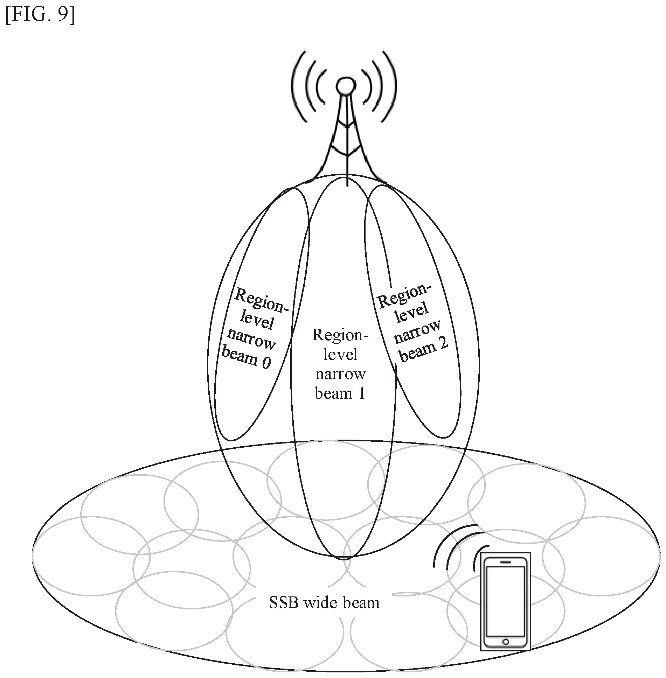

FIG. 8 is a diagram of an access and data transmission procedure according to an embodiment of this application. A network device sends a synchronization sequence and system information using a wide beam, and the synchronization sequence and the system information are included in one information block. FIG. 9 is a diagram of a beam according to an embodiment of this application. The wide beam is equivalent to a plurality of region-level narrow beams. In FIG. 9, one wide beam is equivalent to three region-level narrow beams. After receiving the information block, the terminal device initiates random access to the network device. After receiving a random access request sent by the terminal device, the network device sends an SIB-R and a random access response to the terminal device on the plurality of region-level narrow beams. Therefore, system information in the information block may be referred to as cell (cell)-level system information, and the SIB-R may be referred to as a region-level system information. After receiving the random access response, the terminal device sends a message 3 in the random access procedure to the network device. After receiving the random access request, the network device may determine a position of the terminal device, so that a region-level narrow beam can be determined from the plurality of region-level narrow beams. For example, the position of the terminal device may be a coarse-grained position, and is used to determine a region-level narrow beam to which the terminal device belongs. In addition, the terminal device may report specific position information. After receiving the message 3 in the random access procedure on the determined region-level narrow beam, the network device sends a message 4 to the terminal device on the region-level narrow beam. After receiving the message 4, the terminal device sends a message 5 in the random access procedure to the network device. Correspondingly, the network device receives the message 5 in the random access procedure on the region-level narrow beam. The network device sends the message 4 and receives the message 3 in the random access procedure and the message 5 in the random access procedure on the determined region-level narrow beam, so that transmission performance can be improved.

After the terminal device completes the random access procedure, the network device performs data transmission (referred to as "data transmission") with the terminal device on a narrow beam at a granularity of the terminal device.

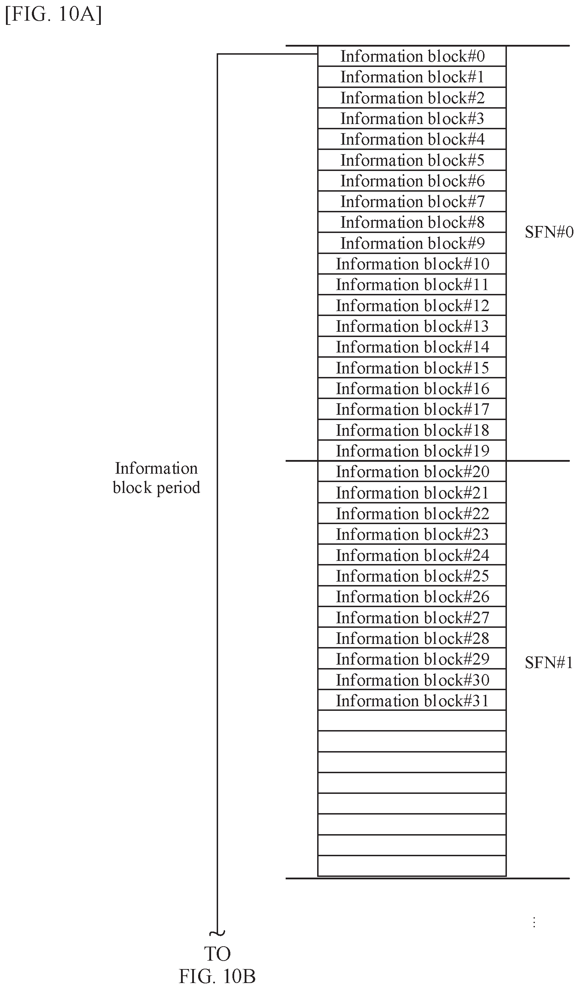

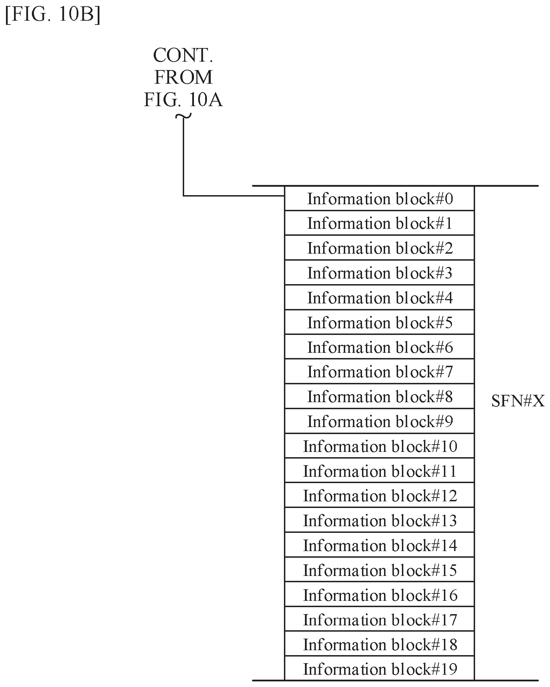

In the ultra-wide coverage scenario, the network device requires a large quantity of beams to complete full coverage. In other words, the network device needs to send the plurality of information blocks in a plurality of beam directions. FIG. 10A and FIG. 10B are diagrams of transmission of a plurality of information blocks according to an embodiment of this application. The plurality of information blocks are consecutive in time domain. Using a subcarrier spacing SCS = 30 kHz as an example, one system frame (each system frame corresponds to one system frame number (system frame number, SFN)) includes 20 slots, and each information block occupies one slot. For example, it is assumed that a maximum of L information blocks may be sent in one information block period. L represents a maximum quantity of information blocks, and may have different values. In FIG. 10A and FIG. 10B, a maximum of 32 (L = 32) information blocks (information block#0 to information block#L-1, that is, information block#0 to information block#31) may be sent in one information block period. The plurality of information blocks are configured to be consecutive in time domain, so that when searching for information blocks, the terminal device can receive the plurality of information blocks in time domain in a centralized manner, and determine an information block to be used. A centralized pattern design reduces an access delay of the terminal device, so that the terminal device can achieve earlier access. Centralized information blocks provide system information in a plurality of consecutive slots, and the terminal device may jointly demodulate and receive system information in adjacent slots, so that performance can be improved.

For a network device that sends a plurality of information blocks, the plurality of information blocks correspond to a plurality of network coverage areas. Each information block is carried on a first beam, and a network coverage area corresponding to the first beam is greater than or equal to a coverage area of a beam sent using the first beam width. That is, the information block is sent using a wide beam.

In addition, each information block may have an index for identification. For example, an index of an information block in a slot 0 is 0, an index of an information block in a slot 1 is 1, and so on. The index may be carried in the information block. In an example, the index may be carried in the system information. The indication may be performed using a specific bit, or may be performed in combination with at least one of a time domain resource and a frequency domain resource position. In another example, the index may be alternatively carried in one or more of a PSS, an SSS, and system information.

For a communication method provided in this embodiment of this application, system information including position information of a network device and a synchronization sequence are sent in a same information block, so that a delay in initiating random access by a terminal device can be reduced, and efficiency of random access can be improved.

In the foregoing embodiment, the format of the SSB is redefined. The following embodiment describes additional sending of system information without changing a format of an existing SSB.

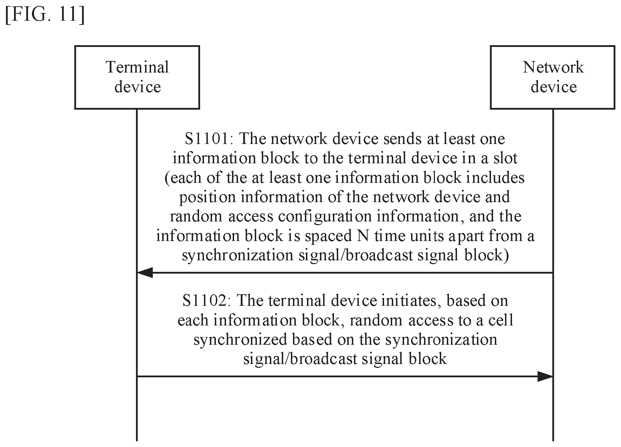

FIG. 11 is a schematic flowchart of another communication method according to an embodiment of this application. For example, the method may include the following steps.

S1101: A network device sends at least one information block to a terminal device in a slot. Correspondingly, the terminal device receives the at least one information block in the slot.

In this embodiment, a time-frequency position of the existing SSB is retained, and the SSB includes a PSS, an SSS, and a MIB. An information block is additionally defined. The information block is used to carry information required by the terminal device to initiate random access. The information block includes position information of the network device and random access configuration information (rach-ConfigCommon). The position information of the network device and the random access configuration information may be referred to as a MIB-E. The MIB-E carries information required by the terminal device to initiate random access. For example, a quantity of bits of the MIB-E may be about 200.

Further, the MIB-E may further include at least one of the following: an uplink transmission common configuration (uplinkConfigCommonSIB/BWP-UplinkCommon), a downlink transmission common configuration (DownlinkConfigCommonSIB/BWP-DownlinkCommon), a quantity of information blocks, a period of the information block, and a pattern of the information block.

Further, each information block may further include one or more DMRSs. The one or more DMRSs are used to demodulate the MIB-E in the information block.

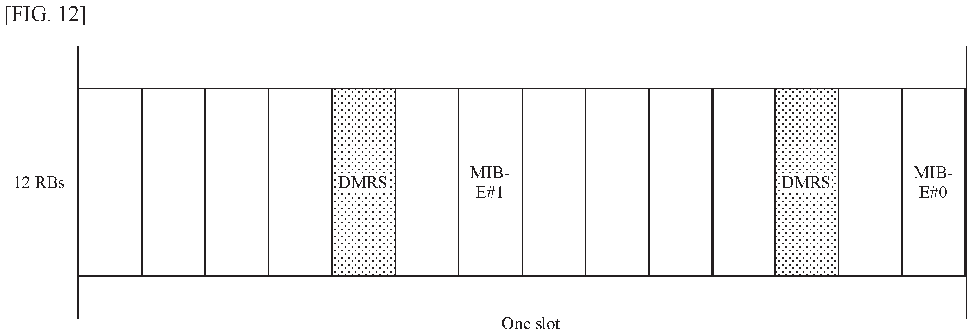

In this embodiment, the network device may send the at least one information block in one slot. FIG. 12 is a diagram of a format of an information block in a single slot according to an embodiment of this application. An MIB-E in one information block occupies six symbols, and a DMRS of one symbol is configured. Two information blocks can be placed in the entire slot. Information block#0 occupies a time domain resource of the first half slot, and information block#1 occupies a time domain resource of the second half slot. When a quantity of information bits of an information block is limited and/or a link budget (i.e., transmission performance, related to a power and a signal-to-noise ratio (signal-to-noise ratio, SNR)) is sufficient, one information block can occupy up to seven symbols, and two information blocks can be placed in one slot. In addition, because the MIB-E occupies a small quantity of time domain symbols, one DMRS may be used to perform channel estimation, time-frequency offset estimation, and/or the like.

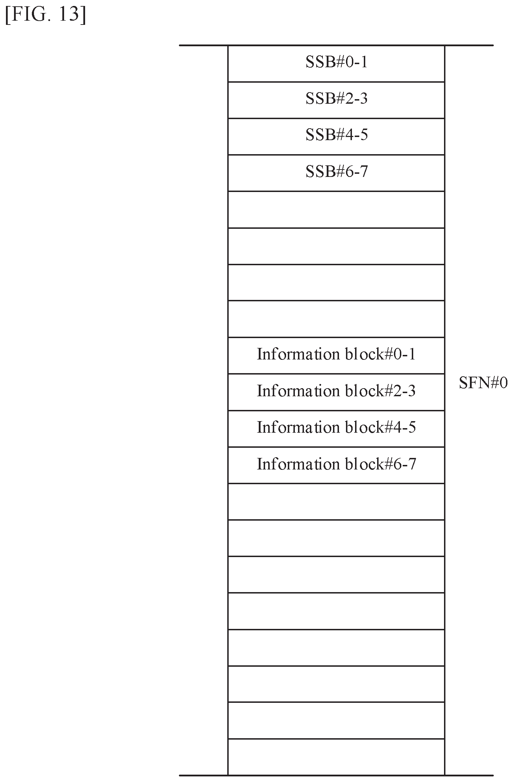

In an ultra-wide coverage scenario, the network device requires a large quantity of beams to complete full coverage. In other words, the network device needs to send a plurality of SSBs and a plurality of information blocks in a plurality of beam directions. In an example, FIG. 13 is a diagram of a format of an information block and an SSB according to an embodiment of this application. A plurality of SSBs and a plurality of information blocks may be sent in one system frame. In this embodiment, the information block is spaced N time units apart from the SSB, where N is an integer greater than or equal to 0. In FIG. 13, information blocks#0-1 are spaced four slots apart from SSBs#6-7. Different SSBs and information blocks correspond to different network coverage areas. For example, in FIG. 13, SSB#0 and information block#0 correspond to a network coverage area 0; SSB#1 and information#1 correspond to a network coverage area 1; and so on.

An existing definition is used for a position of an SSB. An information block is defined at a specific time domain position. For example, in FIG. 13, SSB#0 to SSB#7 occupy slots 0 to 3, and information block#0 to information block#7 occupy slots 8 to 11. The plurality of information blocks are consecutive in time domain. In this way, consecutive time domain resources can be provided for transmission of other data. In FIG. 13, information block#0 to information block#7 are consecutive in time domain. A time domain resource position in the figure is merely an example. Actually, information blocks corresponding to different SSB indexes may be alternatively in another slot. Considering that a quantity of bits that need to be transmitted in information blocks reaches 100 to 200 and a link budget is limited, an information block needs to occupy an independent time domain resource, and does not share a same time domain resource with an SSB. Optionally, when a link budget is sufficient and/or a quantity of information bits is small, an information block and an SSB may occupy a same time domain resource.

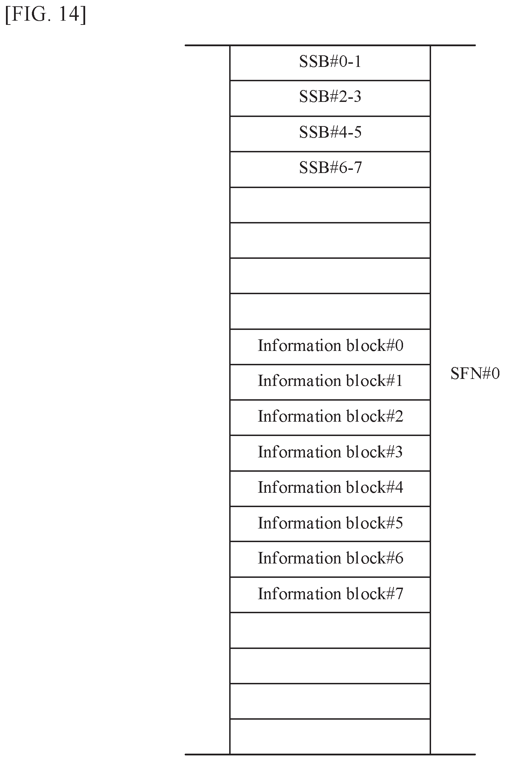

In another example, an information block corresponding to one SSB may alternatively occupy one slot for transmission. FIG. 14 is a diagram of another format of an information block and an SSB according to an embodiment of this application. One information block occupies one slot, and information block#0 to information block#7 occupy a total of eight slots in one system frame. A specific quantity of symbols occupied by the MIB-E may be flexibly defined based on an amount of data that needs to be transmitted.

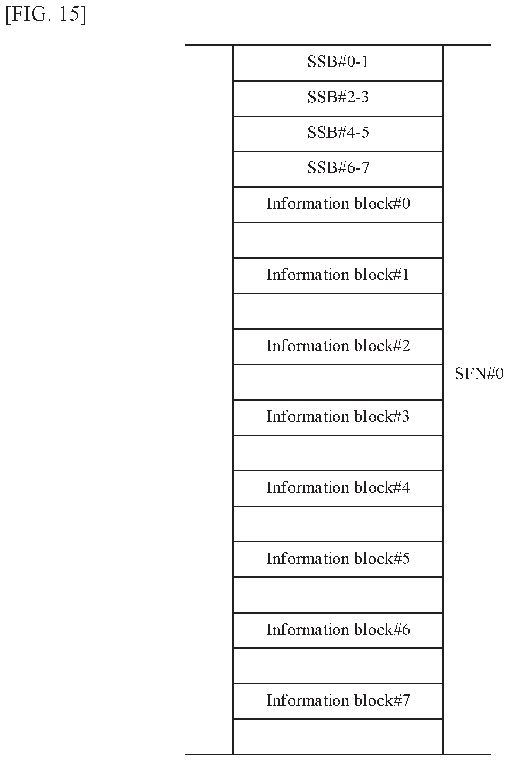

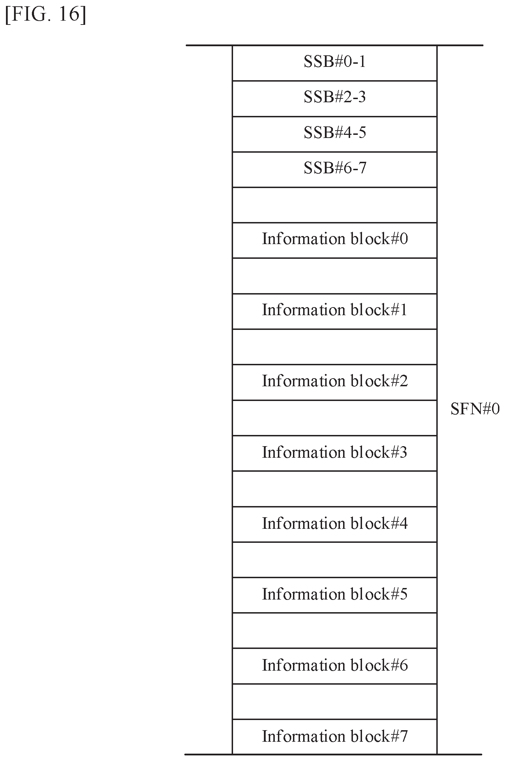

In still another example, an information block corresponding to each SSB may alternatively occupy discrete slots. FIG. 15 and FIG. 16 are diagrams of still another format of an information block and an SSB according to an embodiment of this application. One information block occupies one slot, and slots occupied by information block#0 to information block#7 are discrete. In this way, an idle slot in the system frame may be used to transmit other data corresponding to the same SSB, or may provide an opportunity for repeatedly transmitting information blocks, thereby improving transmission performance and improving reliability of receiving and demodulating information blocks.

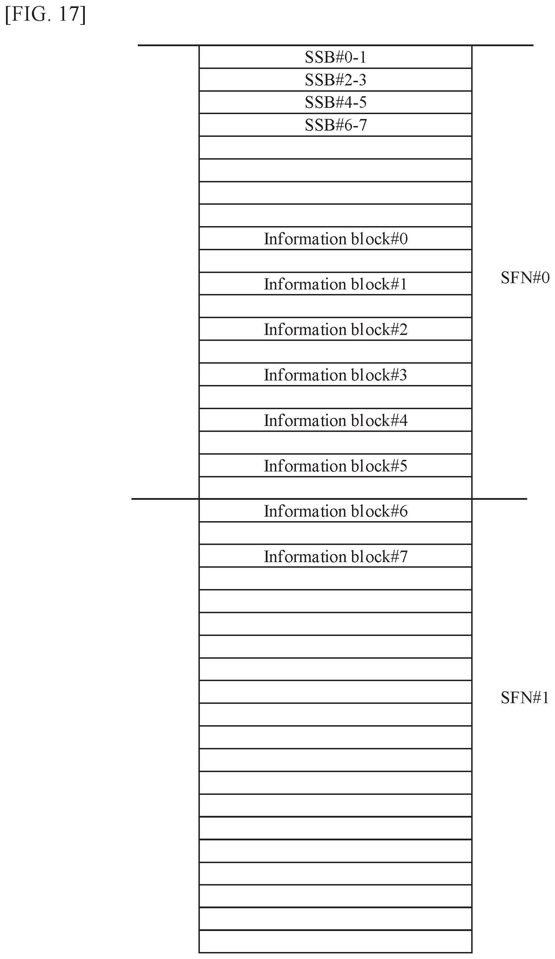

In still another example, a plurality of information blocks may be spaced a specific time resource from the plurality of SSBs. FIG. 17 is a diagram of still another format of an information block and an SSB according to an embodiment of this application. Considering that a particular processing time needs to be reserved between receiving, by a terminal device, an SSB for demodulation and receiving an information block, different time domain resources may be configured for a spacing between the SSBs and the information blocks.

For a network device that sends a plurality of information blocks, the plurality of information blocks correspond to a plurality of network coverage areas. At least one information block may be carried on a first beam, and a network coverage area corresponding to the first beam is greater than or equal to a coverage area of a beam sent using the first beam width. That is, the at least one information block is sent using a wide beam.

In addition, each information block may have an index for identification. For example, an index of an information block in a slot 0 is 0, an index of an information block in a slot 1 is 1, and so on. The index may be carried in the information block. The indication may be performed using a specific bit, or may be performed in combination with at least one of a time domain resource and a frequency domain resource position.

In an implementation, bandwidth corresponding to each information block is less than or equal to 20 resource blocks. For example, an SCS is 30 kHz. Bandwidth corresponding to information blocks in FIG. 12 is 12 RBs, and corresponds to small bandwidth of 4.32 MHz. In the implementation, the information blocks occupy small bandwidth in frequency domain, and a link budget for downlink transmission may be increased in a power aggregation manner, thereby increasing a quantity of information bits that can be transmitted. A MIB in NR generally occupies 20 RBs, and bandwidth of 7.2 Mhz is required when the SCS is 30 kHz.

In an implementation, the at least one information block is carried on a physical downlink shared channel (physical downlink shared channel, PDSCH). In the implementation, the information block in this embodiment is carried using a PDSCH, and a large quantity of transmitted bits can be carried. For example, the PDSCH may carry thousands of bits.

Different from an existing SSB, the SSB in this embodiment may indicate a time-frequency resource position of a corresponding information block. After receiving the SSB, the terminal device may determine, based on information carried in the SSB, a time-frequency resource position of an information block corresponding to the SSB.

For example, several bits in the SSB may indicate a time domain position of the information block corresponding to the SSB, and several bits in the SSB may indicate a frequency domain position of the information block corresponding to the SSB. For example, the SSB indicates an index of a time domain offset and/or an index of a frequency domain offset. The time domain offset is a time domain offset between each information block and the SSB corresponding to each information block, and the frequency domain offset is an offset of a frequency domain start or end position between each information block and the SSB corresponding to each information block. For example, the time domain offset may be a slot offset. For a predefined table index and/or a formula parameter value of a time-frequency resource configuration, several bits in the SSB may indicate a predefined table index and/or a formula parameter value of a time-frequency resource configuration. A specific parameter and a value in a predefined time-frequency resource configuration table indicate a time-frequency resource position of an information block.

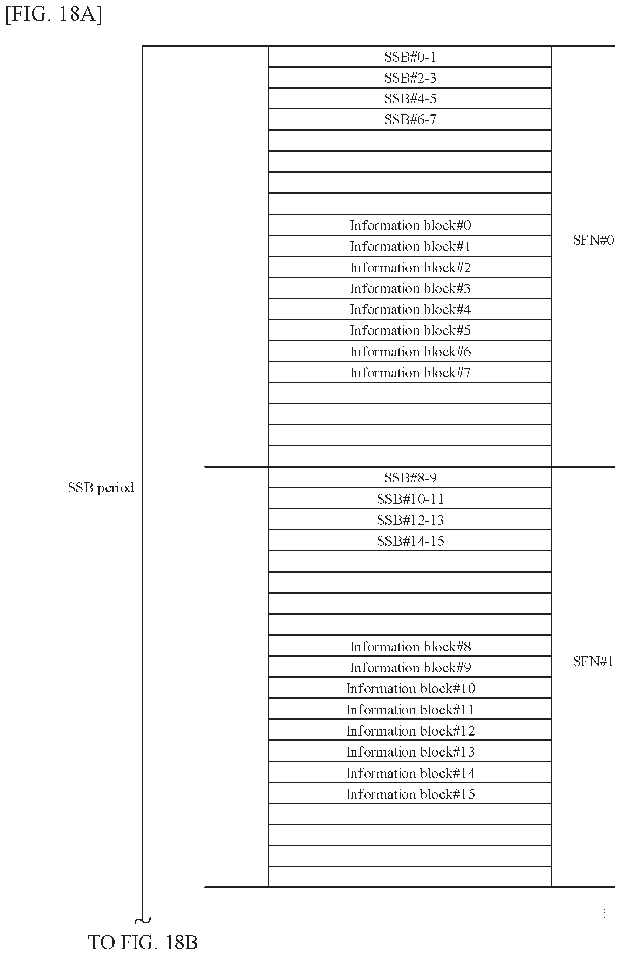

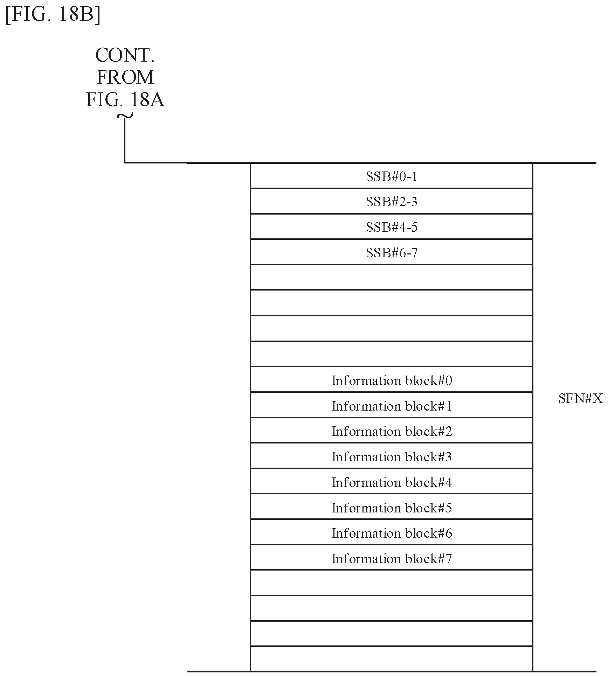

For example, on a time domain resource, an offset of a time domain search space of an information block relative to a slot in which an SSB is located is X. For example, ${n}_{MIB - E _ i} = \left⌊{n}_{{SSB}_{i}}/N\right⌋ + \left(i mod L\right) + X$ . n is a slot, *n_{MIB-E}* is a slot position of the information block or the MIB-E, and *n_{SSB}* is a slot position of the SSB. A value of X is determined based on an index, indicated by a bit in the SSB, in Table 1. N is a quantity of SSBs in each slot. FIG. 18A and FIG. 18B are diagrams of still another format of an information block and an SSB according to an embodiment of this application. Each slot includes two SSBs. Therefore, N = 2. i is an SSB index, and L is a quantity of SSBs per unit time. The unit time may be at a system frame level, for example, 10 ms or 20 ms.

It is assumed that a time domain position in which an SSB 0 is located is a slot 0, and an indicated index in Table 1 is 4. In this case, X = 8. Therefore, a time domain position in which an information block or a MIB-E corresponding to the SSB 0 is located is a slot ${n}_{MIB - E _ i} = \left⌊{n}_{{SSB}_{i}}/2\right⌋ + 0 + 8 = 0 + 0 + 8 = 8$. A time domain position in which an information block or a MIB-E corresponding to an SSB 1 is located is a slot ${n}_{MIB - E _ i} = \left⌊{n}_{{SSB}_{i}}/2\right⌋ + 1 + 8 = 0 + 1 + 8 = 9$ .

**Table 1 PDCCH monitoring occasion parameter of an information block**

| Index | Slot offset X |
|---|---|
| 0 | 4 |
| 1 | 5 |
| 2 | 6 |
| 3 | 7 |
| 4 | 8 |
| 5 | 9 |
| 6 | 10 |
| 7 | 11 |

On a frequency domain resource, an offset of a frequency domain resource of the information block or the MIB-E relative to a frequency domain resource in which the SSB is located is Y. For example, *f_{MIB-E_i}* = *f_{SSBᵢ} + Y. f_{MIB-E_i}* is a frequency domain start/end position of the MIB-E, and *f_{SSBᵢ}* is a frequency domain start/end position of an SSB i. A value of Y is determined based on an index, indicated by a bit in the SSB, in Table 2. For example, when Y = 0 RB, it indicates that a start position or an end position of the frequency domain resource of the MIB-E is the same as a start position or an end position of the frequency domain resource of the SSB.

**Table 2 CORESET resource block of a PDCCH monitoring occasion of an information block**

| Index | Frequency domain offset Y (RB) |
|---|---|
| 0 | 0 |
| 1 | 2 |
| 2 | 4 |
| 3 | 6 |

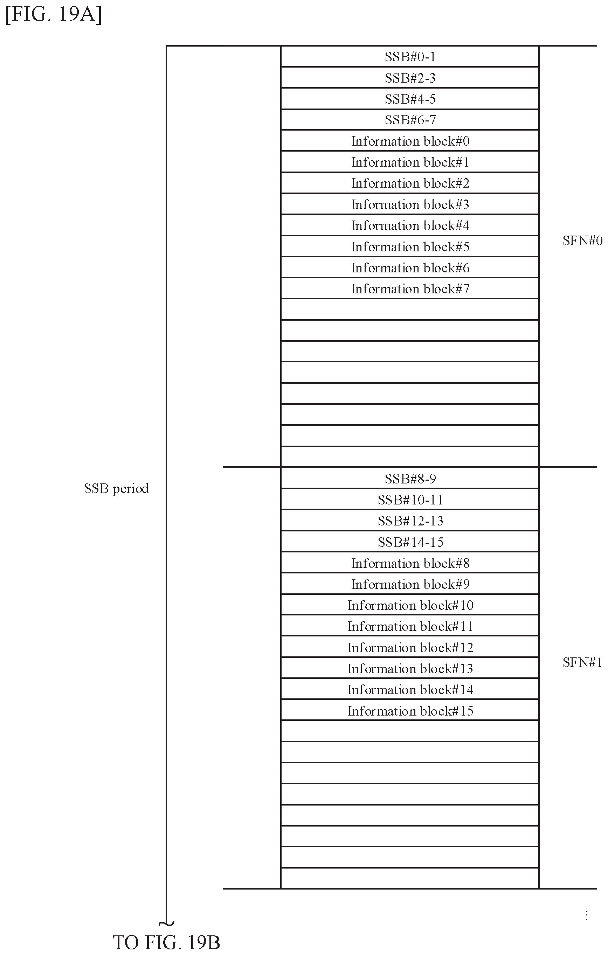

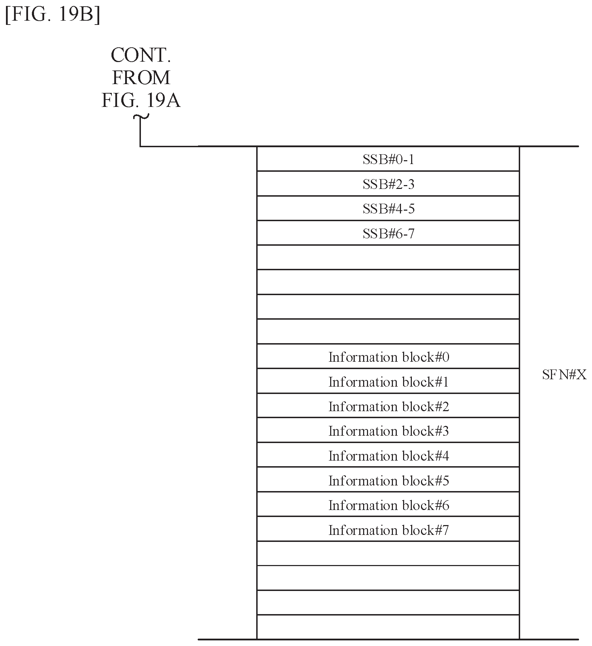

The information block is located in a subsequent idle slot in the system frame. FIG. 19A and FIG. 19B are diagrams of still another format of an information block and an SSB according to an embodiment of this application. When a quantity of SSBs exceeds 8, FIG. 19A and FIG. 19B show 16 SSBs: SSB#0 to SSB#15. Information blocks corresponding to eight SSBs are arranged after every eight SSBs, so that after completing demodulation of the SSB, the terminal device can receive as soon as possible a subsequent information block as soon as possible to obtain cell information required for initiating random access, thereby reducing an access delay. Spaced slots between the SSBs and the information blocks shown in FIG. 19A and FIG. 19B are merely an example, and different configurations may be actually used. In a possible case, as shown in FIG. 19A and FIG. 19B, SSB#7 and information block#0 are placed close to each other. In this arrangement manner, the terminal device may receive the MIB-E more quickly.

S1102. The terminal device initiates, based on each information block, random access to a cell synchronized based on the synchronization signal/broadcast signal block.

After receiving the at least one information block, the terminal device may determine a better information block, and then may synchronize with a cell in the network device based on an SSB corresponding to the information block. The terminal device then initiates random access to the cell synchronized based on the SSB. The initiating random access is specifically sending, by the terminal device, the random access request to the network device. The random access request is carried on a physical random access channel. The random access request includes a random access preamble. The random access request may also be referred to as a message 1.

Further, after receiving the random access request sent by the terminal device, the network device sends a system information block-reserved and a random access response to the terminal device using a beam with a first beam width. After receiving the random access response, the terminal device sends a message 3 in the random access procedure to the network device. After receiving the message 3 in the random access procedure on the beam with the first beam width, the network device sends a message 4 to the terminal device using the beam with the first beam width. After receiving the message 4, the terminal device sends a message 5 in the random access procedure to the network device. Correspondingly, the network device receives the message 5 in the random access procedure on the beam with the first beam width.

The SIB-R is remaining system information other than the MIB-E in the information block in existing SIB1. In other words, the MIB-E in this embodiment carries information required by the terminal device to initiate random access, and compared with SIB1, an amount of carried information is reduced, thereby improving a link budget.

In an implementation, the at least one information block is carried on a first beam, and a beam width of the first beam is greater than or equal to the first beam width. That is, the at least one information block is sent using a wide beam, so that coverage performance can be improved.

The network device may send the SSB and the information block using a wide beam, and the wide beam is equivalent to a plurality of region-level narrow beams. After receiving the information block, the terminal device initiates random access to the network device. After receiving a random access request sent by the terminal device, the network device sends an SIB-R and a random access response to the terminal device on the plurality of region-level narrow beams. Therefore, the MIB-E in the information block may be referred to as cell-level system information, and the SIB-R may be referred to as region-level system information. After receiving the random access response, the terminal device sends a message 3 in the random access procedure to the network device. After receiving the random access request, the network device may determine a position of the terminal device, so that a region-level narrow beam can be determined from the plurality of region-level narrow beams. For example, the position of the terminal device may be a coarse-grained position, and is used to determine a region-level narrow beam to which the terminal device belongs. In addition, the terminal device may report specific position information. After receiving the message 3 in the random access procedure on the determined region-level narrow beam, the network device sends a message 4 to the terminal device on the region-level narrow beam. After receiving the message 4, the terminal device sends a message 5 in the random access procedure to the network device. Correspondingly, the network device receives the message 5 in the random access procedure on the region-level narrow beam. The network device sends the message 4 and receives the message 3 in the random access procedure and the message 5 in the random access procedure on the determined region-level narrow beam, so that transmission performance can be improved.

After the terminal device completes the random access procedure, the network device performs data transmission with the terminal device on a narrow beam at a granularity of the terminal device.

According to a communication method provided in this embodiment of this application, a network device sends at least one information block at a position spaced N time units apart from a synchronization signal/broadcast signal block, and the at least one information block carries necessary information for initiating random access by a terminal device, so that the terminal device can access a cell in time, thereby reducing an access delay.

In this application, "sending information to...(for example, a terminal device)" or a related description in the accompanying drawings may be understood as that a destination end of the information is the terminal device, and may include directly or indirectly sending the information to the terminal device. "Receiving information of...(for example, a terminal device)", "receiving information from...(a terminal device)", or a related description in the accompanying drawings may be understood as that a source of the information is the terminal device, and may include directly or indirectly receiving the information from the terminal device. Information may undergo necessary processing, for example, a format change, between the source for sending the information and the destination. However, the destination may understand valid information from the source. Similar expressions in this application may be understood similarly, and details are not described herein again.

It may be understood that, in this application, an example in which a terminal device and a network device are used as execution entities of an interaction example is used for description. However, the execution entities of the interaction example are not limited in this application. For example, the terminal device in the method provided in this application may be a chip, a chip system, or a processor that is used in the terminal device, or may be a logical node, a logical module, or software that can implement all or some functions of the terminal device. The network device in the method provided in this application may be a chip, a chip system, or a processor that is used in the network device, or may be a logical node, a logical module, or software that can implement all or some functions of the network device.

It may be understood that, in the foregoing embodiments, the method and/or step implemented by the terminal device may be implemented by a component (such as a chip or a circuit) that can be used in the terminal device, and the method and/or step implemented by the network device may be implemented by a component (such as a chip or a circuit) that can be used in the network device.

The foregoing mainly describes the solutions provided in embodiments of this application from a perspective of interaction between the devices. Correspondingly, an embodiment of this application further provides a communication apparatus, and the communication apparatus is configured to implement the foregoing methods. The communication apparatus may be the terminal device in the foregoing method embodiment, or may be a component that can be used in the terminal device; or the communication apparatus may be the network device in the foregoing method embodiment, or may be a component that can be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

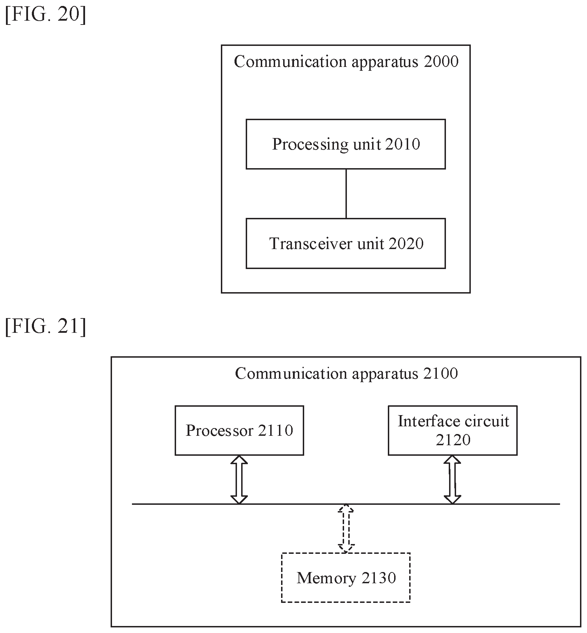

FIG. 20 and FIG. 21 each are a diagram of a possible structure of a communication apparatus according to embodiments of this application. These communication apparatuses may be configured to implement functions of the terminal device or the network device in the foregoing method embodiments. Therefore, beneficial effects of the foregoing method embodiments can also be implemented. In embodiments of this application, the communication apparatus may be one of the terminal devices 120a to 120g shown in FIG. 1, or may be a module (for example, a chip) used in the terminal device or the network device.

As shown in FIG. 20, a communication apparatus 2000 includes a processing unit 2010 and a transceiver unit 2020. The communication apparatus 2000 is configured to implement a function of the terminal device or the network device in the method embodiment shown in FIG. 6 or FIG. 11.

When the communication apparatus 2000 is configured to implement the function of the terminal device in the method embodiment shown in FIG. 6 or FIG. 11, the transceiver unit 2020 is configured to implement the function of the terminal device in steps S601 and S602 in the embodiment shown in FIG. 6, or the transceiver unit 2020 is configured to implement the function of the terminal device in steps S1101 and S1102 in the embodiment shown in FIG. 11.

When the communication apparatus 2000 is configured to implement the function of the network device in the method embodiment shown in FIG. 6 or FIG. 11, the transceiver unit 2020 is configured to implement the function of the network device in steps S601 and S602 in the embodiment shown in FIG. 6, or the transceiver unit 2020 is configured to implement the function of the network device in steps S1101 and S1102 in the embodiment shown in FIG. 11.

For more detailed descriptions of the processing unit 2010 and the transceiver unit 2020, directly refer to the related descriptions in the method embodiment shown in FIG. 6 or FIG. 11. Details are not described herein again.

As shown in FIG. 21, the communication apparatus 2100 includes a processor 2110 and an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, configured to: store instructions executed by the processor 2110, or store input data required by the processor 2110 to run the instructions, or store data generated after the processor 2110 runs the instructions.

When the communication apparatus 2100 is configured to implement the method shown in FIG. 6 or FIG. 11, the processor 2110 is configured to implement the functions of the processing unit 2010, and the interface circuit 2120 is configured to implement the functions of the transceiver unit 2020.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

At least one piece (item) in this application below indicates one piece (item) or a plurality of pieces (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, method, system, product, or device that includes a series of steps or units is not limited to listed steps or units, but optionally further includes another unlisted step or unit, or optionally further includes another inherent step or unit of the process, method, product, or device. It should be noted that in this application, the term such as "example" or "for example" is used to represent giving an example, an illustration, or a description. Any method or design scheme described as an "example" or "for example" in this application should not be construed as being preferred or having more advantages than another method or design scheme. To be precise, use of the words such as "example" or "for example" is intended to present a related concept in a specific manner.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving an information block in a slot, wherein the information block comprises a synchronization sequence and system information, and the system information comprises position information of a network device and random access configuration information; and
initiating, based on the system information, random access to a cell synchronized based on the synchronization sequence.

2. The method according to claim 1, wherein the method further comprises:
receiving a random access response sent by the network device using a beam with a first beam width;
sending a message 3 in a random access procedure;
receiving a message 4 sent by the network device using a beam with the first beam width; and
sending a message 5 in the random access procedure.

3. The method according to claim 1 or 2, wherein the information block is a plurality of information blocks, and the plurality of information blocks are consecutive in time domain.

4. A communication method, wherein the method comprises:
sending an information block in a slot, wherein the information block comprises a synchronization sequence and system information, and the system information comprises position information of a network device and random access configuration information; and
receiving, based on the system information, random access initiated to a cell synchronized based on the synchronization sequence.

5. The method according to claim 4, wherein the method further comprises:
sending a random access response using a beam with a first beam width;
receiving a message 3 in a random access procedure on the beam with the first beam width;
sending a message 4 on a beam with the first beam width; and
receiving a message 5 in the random access procedure on the beam with the first beam width.

6. The method according to claim 2 or 5, wherein the information block is carried on a first beam, and a beam width of the first beam is greater than or equal to the first beam width.

7. The method according to claim 6, wherein a network coverage area corresponding to the first beam is greater than or equal to a coverage area of a beam sent using the first beam width.

8. The method according to any one of claims 4 to 7, wherein the information block is a plurality of information blocks, the plurality of information blocks are consecutive in time domain, and the plurality of information blocks correspond to a plurality of network coverage areas.

9. The method according to any one of claims 1 to 8, wherein bandwidth corresponding to the information block is less than or equal to 20 resource blocks.

10. The method according to any one of claims 1 to 9, wherein in the information block, the synchronization sequence is consecutive with the system information in time domain, and a time domain position of the synchronization sequence precedes a time domain position of the system information.

11. The method according to any one of claims 1 to 10, wherein the information block further comprises a plurality of demodulation reference signals, and the plurality of demodulation reference signals are used to demodulate the system information.

12. The method according to any one of claims 1 to 11, wherein the information block is carried on a physical downlink shared channel.

13. The method according to any one of claims 1 to 12, wherein the system information further comprises at least one of the following: an uplink transmission common configuration, a downlink transmission common configuration, a quantity of information blocks, a period of the information block, and a pattern of the information block.

14. A communication method, wherein the method comprises:
receiving at least one information block in a slot, wherein each of the at least one information block comprises position information of a network device and random access configuration information, the information block is spaced N time units apart from a synchronization signal/broadcast signal block, and N is an integer greater than or equal to 0; and
initiating, based on each information block, random access to a cell synchronized based on the synchronization signal/broadcast signal block.

15. The method according to claim 14, wherein the method further comprises:
receiving a random access response sent by the network device using a beam with a first beam width;
sending a message 3 in a random access procedure;
receiving a message 4 sent by the network device using a beam with the first beam width; and
sending a message 5 in the random access procedure.

16. The method according to claim 14 or 15, wherein the at least one information block is consecutive in time domain.

17. A communication method, wherein the method comprises:
sending at least one information block in a slot, wherein each of the at least one information block comprises position information of a network device and random access configuration information, the information block is spaced N time units apart from a synchronization signal/broadcast signal block, and N is an integer greater than or equal to 0; and
receiving, based on each information block, random access initiated to a cell synchronized based on the synchronization signal/broadcast signal block.

18. The method according to claim 17, wherein the method further comprises:
sending a random access response using a beam with a first beam width;
receiving a message 3 in a random access procedure on a beam with the first beam width;
sending a message 4 on a beam with the first beam width; and
receiving a message 5 in the random access procedure on the first beam width.

19. The method according to claim 17 or 18, wherein the at least one information block is consecutive in time domain, and the at least one information block respectively corresponds to at least one network coverage area.

20. The method according to any one of claims 14 to 19, wherein the synchronization signal/broadcast signal block indicates a time-frequency resource position of each information block.

21. The method according to claim 20, wherein the synchronization signal/broadcast signal block indicates an index of a time domain offset and/or an index of a frequency domain offset, the time domain offset is a time domain offset between each information block and the synchronization signal/broadcast signal block corresponding to each information block, and the frequency domain offset is an offset of a frequency domain start or end position between each information block and the synchronization signal/broadcast signal block corresponding to each information block.

22. The method according to claim 15 or 18, wherein each information block is carried on a first beam, and a beam width of the first beam is greater than or equal to the first beam width.

23. The method according to claim 22, wherein a network coverage area corresponding to the first beam is greater than or equal to a coverage area of a beam sent using the first beam width.

24. The method according to any one of claims 14 to 23, wherein bandwidth corresponding to each information block is less than or equal to 20 resource blocks.

25. The method according to any one of claims 14 to 24, wherein each information block further comprises a plurality of demodulation reference signals, and the plurality of demodulation reference signals are used to demodulate the system information.

26. The method according to any one of claims 14 to 25, wherein the at least one information block is carried on a physical downlink shared channel.

27. The method according to any one of claims 14 to 26, wherein each information block further comprises at least one of the following: an uplink transmission common configuration, a downlink transmission common configuration, a quantity of information blocks, a period of the information block, and a pattern of the information block.

28. A communication apparatus, wherein the apparatus comprises a module configured to perform the method according to any one of claims 1 to 27.

29. A communication system, comprising a first communication apparatus and a second communication apparatus, wherein the first communication apparatus is configured to perform the method according to any one of claims 1 to 3 and 6 to 13, and the second communication apparatus is configured to perform the method according to any one of claims 4 to 13.

30. A communication system, comprising a first communication apparatus and a second communication apparatus, wherein the first communication apparatus is configured to perform the method according to any one of claims 14 to 16 and 20 to 27, and the second communication apparatus is configured to perform the method according to any one of claims 17 to 27.

31. A communication apparatus, comprising a memory, a processor, and a computer program stored in the memory and configured to be executed on the processor, wherein the processor, when executing the computer program, implements the method according to any one of claims 1 to 27.

32. A computer-readable storage medium, wherein the computer-readable storage medium stores a computer program or instructions, and when the computer program or the instructions are executed, the method according to any one of claims 1 to 27 is performed.

33. A computer program product, wherein the computer program product comprises related program instructions, and when the related program instructions are executed, the method according to any one of claims 1 to 27 is implemented.
